# EUROPEAN PATENT APPLICATION

(11) **EP 4 386 779 A1**
(43) Date of publication of application: **19.06.2024**
(21) Application number: 22855866.4
(22) Date of filing: 08.08.2022
(51) Int. Cl.: H01B 1/10, B02C 15/12, C03B 8/00, H01B 1/06, H01M 4/62, H01M 10/052, H01M 10/0562

(54) **SULFIDE-BASED INORGANIC SOLID ELECTROLYTE MATERIAL, SOLID ELECTROLYTE MEMBRANE, ALL-SOLID-STATE LITHIUM-ION BATTERY, APPARATUS FOR MANUFACTURING SULFIDE-BASED INORGANIC SOLID ELECTROLYTE MATERIAL, AND METHOD FOR MANUFACTURING SULFIDE-BASED INORGANIC SOLID ELECTROLYTE MATERIAL**

(30) Priority: 11.08.2021 JP 2021131099; 11.08.2021 JP 2021131100
(71) Applicant: Furukawa Co., Ltd., Chiyoda-ku Tokyo 100-8370 (JP)
(72) Inventor: KIKUCHI, Masaaki, Tsukuba-shi, Ibaraki 305-0856 (JP); YOSHIDA, Tatsushi, Tsukuba-shi, Ibaraki 305-0856 (JP); TAMURA, Motoshi, Tsukuba-shi, Ibaraki 305-0856 (JP)
(74) Representative: Müller, Christian Stefan Gerd
(86) International application number: PCT/JP2022/030241
(87) International publication number: WO 2023/017804

(57) **Abstract**

Provided is a sulfide-based inorganic solid electrolyte material where a particle size d₅₀ at which a cumulative frequency in a volume-based cumulative frequency distribution curve measured using a laser diffraction scattering particle size distribution analyzer is 50% is 0.1 um or more and 100 um or less, in which an attachment area measured using the following (method) is 10% or less. (Method) (1) An 8 cm long × 9 cm wide SUS304 plate where, when measured according to JIS B 0601 (2013), an arithmetic mean roughness Ra is 0.017 um or more and 0.023 um or less, a maximum height Rz is 0.14 um or more and 0.18 µm or less, and a ten-point average roughness Rzjis is 0.12 um or more and 0.16 um or less is provided such that a vertical side as a tangent line to a horizontal plane is inclined by 45° with respect to the horizontal plane. (2) Using a sieve having a mesh size of 250 um, 10 g of a sulfide-based inorganic solid electrolyte material is screened out to the SUS304 plate from a height of 10 cm from the horizontal plane such that the sulfide-based inorganic solid electrolyte material is applied to the entire SUS304 plate. (3) 47 g of one zirconia ball is dropped three times from a height of 5 cm from an upper end of the SUS304 plate to impact only the upper end of the SUS304 plate without impacting a surface of the SUS304 plate to which the sulfide-based inorganic solid electrolyte material is attached. (4) An area of the impacted surface of the SUS304 plate to which the sulfide-based inorganic solid electrolyte material is attached is measured, and a ratio (attachment area) of the measured area to an area of a single surface of the SUS304 plate is calculated.

## Description

### TECHNICAL FIELD

The present invention relates to a sulfide-based inorganic solid electrolyte material, a solid electrolyte membrane, an all-solid-state lithium ion battery, a device for manufacturing a sulfide-based inorganic solid electrolyte material, and a method of manufacturing a sulfide-based inorganic solid electrolyte material.

### BACKGROUND ART

In general, a lithium ion battery is used as a power supply of a small mobile device such as a mobile phone or a laptop. In addition, recently, the lithium ion battery has been used not only as a power supply of a small mobile device but also as a power supply of an electric vehicle, an electric power storage, or the like.

In a currently commercially available lithium ion battery, an electrolytic solution including a combustible organic solvent is used. On the other hand, in a lithium ion battery in which the electrolytic solution is replaced with a solid electrolyte such that the entire battery is made of a solid (hereinafter, also referred to as "all-solid-state lithium ion battery"), a combustible organic solvent is not used in the battery. Therefore, it is considered that a safety device can be simplified and manufacturing costs or productivity is excellent.

Recently, as a solid electrolyte material of the lithium ion battery, a solid electrolyte membrane mainly including a sulfide solid electrolyte material may be used. In the sulfide-based inorganic solid electrolyte material, for example, as raw materials, lithium sulfide (Li₂S) and phosphorus pentasulfide (P₂S₅) are used as a main component.

Patent Document 1 (Japanese Unexamined Patent Publication No. 2016-27545) describes a sulfide-based solid electrolyte material having a peak at a position of 2θ = 29.86° ± 1.00° in X-ray diffraction measurement using a CuKα ray and a composition of Li_{2y+3}PS₄ (0.1 ≤ y ≤ 0.175).

In addition, P₂S₅ is highly reactive and unstable ionic crystal powder, and transitions into a stable state along with the progress of a chemical reaction with Li₂S by mechanical milling. However, P₂S₅ is attached to and deposited on a device inner wall surface in the process of the transition into the stable state. As a technique of preventing the attachment and deposition in the process of manufacturing the powder, for example, various efforts in the related art including blasting for forming fine unevenness on the surface as described in the following Patent Documents have been made.

Patent Document 2 (Japanese Unexamined Patent Publication No. 2017-119902) describes a powder attachment suppression titanium member in which an arithmetic mean roughness (Ra) of a surface part having an uneven surface that comes into contact with powder is 0.4 um or more and 2.0 um or less and a Vickers hardness of the surface part is 400 or higher. In addition, as the powder to be handled silver particles having a median diameter of 1.5 µm, nickel particles having a median diameter of 2.5 µm, a powder coating material having a median diameter of 23 µm, and alumina having a median diameter of 8 um are described in Examples.

Patent Document 3 (Japanese Unexamined Patent Publication No. 2017-128101) describes a powder attachment suppression member including a film having an uneven surface that comes into contact with powder, in which an arithmetic mean roughness (Ra) of the uneven surface is 0.2 um or more and 1.6 um or less and a Vickers hardness of the film is 400 or higher. In addition, as the powder to be handled silver particles having a median diameter of 1.5 um, copper particles having a median diameter of 22.3 um, PTFE particles having a median diameter of 0.3 um, and alumina particles having a median diameter of 8 um are described in Examples.

### RELATED DOCUMENT

### PATENT DOCUMENT

[Patent Document 1] Japanese Unexamined Patent Publication No. 2016-27545
[Patent Document 2] Japanese Unexamined Patent Publication No. 2017-119902
[Patent Document 3] Japanese Unexamined Patent Publication No. 2017-128101

### SUMMARY OF THE INVENTION

### TECHNICAL PROBLEM

However, in the related art, it was found that, for the obtained sulfide-based inorganic solid electrolyte material, there is a variation in lithium ionic conductivity depending on manufacturing batches. In addition, it was found that, in a device for manufacturing a sulfide-based inorganic solid electrolyte material, blasting for forming fine unevenness on a device inner wall surface has no effect, and powder is attached to and deposited on the device inner wall surface.

The present invention has been made in consideration of the above-described circumstances, and an object thereof is to provide a sulfide-based inorganic solid electrolyte material, a solid electrolyte membrane, and an all-solid-state lithium ion battery, in which a variation in lithium ionic conductivity depending on manufacturing batches is small while maintaining handling properties and lithium ionic conductivity. In addition, another object of the present invention is to provide a device for manufacturing a sulfide-based inorganic solid electrolyte material and a method of manufacturing a sulfide-based inorganic solid electrolyte material, in which the attachment and deposition of powder to and on a device inner wall surface is prevented and improvement of recovery yield or uniformization of physical property values of products during manufacturing can be realized.

### SOLUTION TO PROBLEM

The present inventors conducted a thorough investigation to achieve the above-described objects. As a result, it was found that by suppressing the attachment of the sulfide-based inorganic solid electrolyte material to the metal plate when a sulfide-based inorganic solid electrolyte material is screened out to a smooth metal plate, a sulfide-based inorganic solid electrolyte material having high lithium ionic conductivity where a variation in lithium ionic conductivity depending on manufacturing batches is small while maintaining handling properties and lithium ionic conductivity can be stably obtained. In addition, it was also found that, when a device inner wall surface is a smooth surface having a low arithmetic mean roughness, the attachment and deposition of powder to and on the device inner wall surface can be prevented. Based on these findings, the present invention has been completed.

That is, according to the present invention, a sulfide-based inorganic solid electrolyte material, a solid electrolyte membrane, an all-solid-state lithium ion battery, a device for manufacturing a sulfide-based inorganic solid electrolyte material, and a method of manufacturing a sulfide-based inorganic solid electrolyte material are provided.

[1] A sulfide-based inorganic solid electrolyte material where a particle size d₅₀ at which a cumulative frequency in a volume-based cumulative frequency distribution curve measured using a laser diffraction scattering particle size distribution analyzer is 50% is 0.1 um or more and 100 um or less,
   in which an attachment area measured using the following (method) is 10% or less,
   (method)
   (1) an 8 cm long × 9 cm wide SUS304 plate where, when measured according to JIS B 0601 (2013), an arithmetic mean roughness Ra is 0.017 um or more and 0.023 um or less, a maximum height Rz is 0.14 um or more and 0.18 um or less, and a ten-point average roughness Rzjis is 0.12 um or more and 0.16 um or less is provided such that a vertical side as a tangent line to a horizontal plane is inclined by 45° with respect to the horizontal plane,
   (2) using a sieve having a mesh size of 250 um, 10 g of a sulfide-based inorganic solid electrolyte material is screened out to the SUS304 plate from a height of 10 cm from the horizontal plane such that the sulfide-based inorganic solid electrolyte material is applied to the entire SUS304 plate,
   (3) 47 g of one zirconia ball is dropped three times from a height of 5 cm from an upper end of the SUS304 plate to impact only the upper end of the SUS304 plate without impacting a surface of the SUS304 plate to which the sulfide-based inorganic solid electrolyte material is attached, and
   (4) an area of the impacted surface of the SUS304 plate to which the sulfide-based inorganic solid electrolyte material is attached is measured, and a ratio of the measured area to an area of a single surface of the SUS304 plate (attachment area) is calculated.
[2] The sulfide-based inorganic solid electrolyte material according to [1], including:
   Li, P, and S as constituent elements.
[3] The sulfide-based inorganic solid electrolyte material according to [2],
   in which a molar ratio (Li/P) of a content of Li to a content of P in the sulfide-based inorganic solid electrolyte material is 1.0 or higher and 10.0 or lower, and a molar ratio (S/P) of a content of S to the content of P in the sulfide-based inorganic solid electrolyte material is 1.0 or higher and 10.0 or lower.
[4] The sulfide-based inorganic solid electrolyte material according to any one of [1] to [3],
   in which a lithium ionic conductivity is 1.0 × 10⁻⁴ S·cm⁻¹ or higher when measured using an alternating current impedance method under measurement conditions of 27.0°C, an applied voltage of 10 mV, and a measurement frequency range of 0.1 Hz to 7 MHz.
[5] A solid electrolyte membrane including:
   the sulfide-based inorganic solid electrolyte material according to any one of [1] to [4].
[6] An all-solid-state lithium ion battery including:
   a positive electrode including a positive electrode active material layer;
   an electrolyte layer; and
   a negative electrode including a negative electrode active material layer,
   wherein at least one of the positive electrode active material layer, the electrolyte layer, and the negative electrode active material layer includes the sulfide-based inorganic solid electrolyte material according to any one of [1] to [4].
[7] A device for manufacturing a sulfide-based inorganic solid electrolyte material, the device including:
   a blowing unit that blows inert gas;
   a crushing unit that repeats an operation of vitrifying plural kinds of inorganic compounds for forming the sulfide-based inorganic solid electrolyte material using mechanical energy and an operation of blowing up the plural kinds of vitrified inorganic compounds with the inert gas blown by the blowing unit;
   a first recovery unit that receives entry of at least a part of the plural kinds of inorganic compounds blown up with the inert gas and returns at least the part of the plural kinds of inorganic compounds to the crushing unit; and
   a system that circulates the inert gas from the blowing unit to the blowing unit through the crushing unit and the first recovery unit,
   in which an arithmetic mean roughness Ra of a device inner wall surface of the crushing unit measured according to JIS B 0601 (2013) is 0.02 um or less.
[8] The device according to [7],
   in which a maximum height Rz of the device inner wall surface of the crushing unit measured according to JIS B 0601 (2013) is 0.16 um or less.
[9] The device according to [7] or [8],
   in which a ten-point average roughness Rzjis of the device inner wall surface of the crushing unit measured according to JIS B 0601 (2013) is 0.14 um or less.
[10] The device according to any one of [7] to [9], further including:
   a first container that contains the plural kinds of inorganic compounds to be supplied to the crushing unit;
   a first pipe that is connected to the first recovery unit and the first container; and
   a first valve that is detachably attached to the first pipe together with the first container.
[11] The device according to [10], further including:
   a first line that introduces inert gas into the first pipe.
[12] The device according to any one of [7] to [11], further including:
   a second recovery unit that receives entry of the sulfide-based inorganic solid electrolyte material blown up with the inert gas;
   a second pipe that is connected to the crushing unit and the first recovery unit;
   a second valve that is provided in the second pipe;
   a third pipe that is connected to the second recovery unit and a portion of the second pipe positioned between the crushing unit and the second valve; and
   a third valve that is provided in the third pipe.
[13] The device according to [12], further including:
   a second container that contains the sulfide-based inorganic solid electrolyte material recovered by the second recovery unit;
   a fourth pipe that is connected to the second recovery unit and the second container; and
   a second line that introduces inert gas into the fourth pipe.
[14] The device according to any one of [7] to [13], further including:
   a fifth pipe that connects the blowing unit and the crushing unit;
   a fifth valve that is provided in the fifth pipe;
   a sixth pipe that returns at least the part of the plural kinds of inorganic compounds from the first recovery unit to the crushing unit; and
   a sixth valve that is provided in the sixth pipe.
[15] The device according to [14],
   in which an arithmetic mean roughness Ra of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.02 um or less.
[16] The device according to [14] or [15],
   in which a maximum height Rz of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.16 um or less.
[17] The device according to any one of [14] to [16],
   in which a ten-point average roughness Rzjis of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.14 um or less.
[18] The device according to any one of [7] to [17], further including:
   a pressure reduction unit that reduces an internal pressure of the crushing unit.
[19] The device according to any one of [7] to [18],
   in which the crushing unit includes a rotating table, a plurality of balls, and a pressing unit, the plurality of balls being disposed around a rotation axis of the rotating table and being individually rotatable around rotation axes that rotate together with the rotation of the rotating table, and the pressing unit pressing the plurality of balls to the rotating table from a side opposite to the rotating table.
[20] The device according to any one of [7] to [19],
   in which the crushing unit includes a cover unit that directs a flow of the inert gas, with which the plural kinds of inorganic compounds are blown up, to a center of the crushing unit and a downward direction of the crushing unit.
[21] The device according to any one of [7] to [20],
   in which the plural kinds of inorganic compounds include Li.
[22] A method of manufacturing a sulfide-based inorganic solid electrolyte material, the method including:
   a step (A): a step of preparing an inorganic composition including two or more kinds of inorganic compounds as raw materials; and
   a step (B): a step of obtaining a sulfide-based inorganic solid electrolyte material by mechanically processing the inorganic composition such that the inorganic composition is vitrified while the inorganic compounds as the raw materials chemically react each other,
   in which the step (B) includes
   allowing a blowing unit to blow inert gas;
   allowing a crushing unit to repeat an operation of vitrifying plural kinds of inorganic compounds for forming the sulfide-based inorganic solid electrolyte material using mechanical energy and an operation of blowing up the plural kinds of vitrified inorganic compounds with the inert gas blown by the blowing unit;
   returning at least a part of the plural kinds of inorganic compounds that are blown up with the inert gas to enter a first recovery unit to the crushing unit from the first recovery unit; and
   circulating the inert gas from the blowing unit to the blowing unit through the crushing unit and the first recovery unit.
[23] The method of manufacturing a sulfide-based inorganic solid electrolyte material according to [22], further including:
   a step (C): a step of crushing, classifying, or granulating the obtained sulfide-based inorganic solid electrolyte material.

### ADVANTAGEOUS EFFECTS OF INVENTION

According to the present invention, it is possible to provide a sulfide-based inorganic solid electrolyte material, a solid electrolyte membrane, and an all-solid-state lithium ion battery, in which a variation in lithium ionic conductivity depending on manufacturing batches is small while maintaining handling properties and lithium ionic conductivity. In addition, it is possible to provide a device for manufacturing a sulfide-based inorganic solid electrolyte material and a method of manufacturing a sulfide-based inorganic solid electrolyte material, in which improvement of recovery yield or uniformization of physical property values of products during manufacturing can be realized.

### BRIEF DESCRIPTION OF THE DRAWINGS

Fig. 1 is a diagram showing a device according to an embodiment.
Fig. 2 is a top view showing a rotating table and a plurality of balls of a crushing unit shown in Fig. 1.
Fig. 3 is a cross-sectional view taken along line A-A' of Fig. 2.
Fig. 4 is a diagram showing a modification example of Fig. 3.
Fig. 5 is a cross-sectional view showing an example of a structure of an electrode for an all-solid-state lithium ion battery according to the present embodiment.
Fig. 6 is a schematic diagram showing a screening test and a measurement test of an attachment area according to the present embodiment.
Fig. 7 is a schematic diagram showing the screening test, a pressing test, and the measurement test of the attachment area according to the present embodiment.
Fig. 8 is a schematic diagram showing the pressing test according to the present embodiment.
Fig. 9 is a schematic diagram showing the pressing test according to the present embodiment.
Fig. 10 is a diagram showing a measurement result of the attachment area according to the present embodiment.

### DESCRIPTION OF EMBODIMENTS

Hereinafter, an embodiment of the present invention will be described using the drawings. The drawings are schematic and do not necessarily correspond to actual dimensional ratios. In the present embodiment, unless specified otherwise, a layer formed of a positive electrode material will be referred to as a positive electrode active material layer, and a laminate where the positive electrode active material layer is formed on a current collector will be referred to as a positive electrode. In addition, a layer formed of a negative electrode material will be referred to as a negative electrode active material layer, and a laminate where the negative electrode active material layer is formed on the current collector will be referred to as a negative electrode.

### [Sulfide-Based Inorganic Solid Electrolyte Material]

First, a sulfide-based inorganic solid electrolyte material according to the present embodiment will be described.

The sulfide-based inorganic solid electrolyte material according to the present embodiment is a sulfide-based inorganic solid electrolyte material where a particle size d₅₀ at which a cumulative frequency in a volume-based cumulative frequency distribution curve measured using a laser diffraction scattering particle size distribution analyzer is 50% is 0.1 um or more and 100 µm or less, in which an attachment area measured using the following (method) is 10% or less.

### (Method)

(1) An 8 cm long × 9 cm wide SUS304 plate where, when measured according to JIS B 0601 (2013), an arithmetic mean roughness Ra is 0.017 um or more and 0.023 um or less, a maximum height Rz is 0.14 um or more and 0.18 um or less, and a ten-point average roughness Rzjis is 0.12 um or more and 0.16 um or less is provided such that a vertical side as a tangent line to a horizontal plane is inclined by 45° with respect to the horizontal plane.
(2) Using a sieve having a mesh size of 250 um, 10 g of a sulfide-based inorganic solid electrolyte material is screened out to the SUS304 plate from a height of 10 cm from the horizontal plane such that the sulfide-based inorganic solid electrolyte material is applied to the entire SUS304 plate.
(3) 47 g of one zirconia ball is dropped three times from a height of 5 cm from an upper end of the SUS304 plate to impact only the upper end of the SUS304 plate without impacting a surface of the SUS304 plate to which the sulfide-based inorganic solid electrolyte material is attached.
(4) an area of the impacted surface of the SUS304 plate to which the sulfide-based inorganic solid electrolyte material is attached is measured, and a ratio of the measured area to an area of a single surface of the SUS304 plate is calculated. The ratio will be referred as an attachment area.

Examples of raw materials of the sulfide-based inorganic solid electrolyte material include P₂S₅, Li₂S, and Li₃N. For example, P₂S₅ is highly reactive and unstable ionic crystal powder, and thus is stabilized by being vitrified together with Li₂S through a process such as mechanical milling and being crystallized through a heat treatment. The crystallinity of the stabilized sulfide-based inorganic solid electrolyte material affects the lithium ionic conductivity of a solid electrolyte membrane obtained using the sulfide-based inorganic solid electrolyte material. At this time, the vitrification of the sulfide-based inorganic solid electrolyte material caused by mechanical milling or the like is insufficient, and when a target crystal phase is not formed in the heat treatment, the lithium ionic conductivity of the obtained solid electrolyte membrane deteriorates.

In addition, regarding the sulfide-based inorganic solid electrolyte material manufactured using a mechanical milling method in the related art, when a sulfide-based inorganic solid electrolyte material of which the reaction is insufficient gets mixed in with a sulfide-based inorganic solid electrolyte material recovered from a manufacturing device, there may be a variation in lithium ionic conductivity depending on manufacturing batches.

According to an investigation by the present inventors, it was found that a sulfide-based inorganic solid electrolyte material having high lithium ionic conductivity where a variation in lithium ionic conductivity depending on manufacturing batches is small while maintaining handling properties and lithium ionic conductivity in the related art can be stably obtained by preparing the sulfide-based inorganic solid electrolyte material such that an attachment area of the sulfide-based inorganic solid electrolyte material to the SUS304 plate is 10% or less, that is, by appropriately selecting manufacturing conditions or combinations such that the attachment area is in a specific range under the following conditions: a SUS304 plate where, when measured according to JIS B 0601 (2013), an arithmetic mean roughness Ra is 0.017 um or more and 0.023 um or less, a maximum height Rz is 0.14 um or more and 0.18 um or less, and a ten-point average roughness Rzjis is 0.12 um or more and 0.16 um or less is provided such that a vertical side as a tangent line to a horizontal plane is inclined by 45° with respect to the horizontal plane; using a sieve having a mesh size of 250 um, 10 g of a sulfide-based inorganic solid electrolyte material is screened out to the SUS304 plate from a height of 10 cm from the horizontal plane; and 47 g of one zirconia ball is dropped three times from a height of 5 cm from an upper end of the SUS304 plate to impact the upper end of the SUS304 plate. Based on this finding, the present invention has been completed.

Although the reason for this is not clear, the small attachment area to the SUS304 plate can be interpreted as a small amount of an unreacted raw material composition that is unstable and highly reactive. As a result, it is considered that a sulfide-based inorganic solid electrolyte material where a variation in lithium ionic conductivity depending on manufacturing batches is small while maintaining handling properties and lithium ionic conductivity in the related art can be provided.

Here, in the sulfide-based inorganic solid electrolyte material according to the present embodiment, the upper limit of the attachment area measured using the above-described (method) is 10% or less, more preferably 8% or less, and still more preferably 5% or less. By adjusting the attachment area to be the upper limit or less, the amount of the unreacted raw material composition in the sulfide-based inorganic solid electrolyte material can be further reduced.

In addition, the lower limit of the attachment area is not particularly limited and is, for example, 0% or more.

In the sulfide-based inorganic solid electrolyte material according to the present embodiment, in order to achieve the above-described attachment area, it is preferable to appropriately select the following two points:
(i) a raw material mixing ratio of the sulfide-based inorganic solid electrolyte material; and
(ii) a manufacturing method.

Here, as (i) the raw material mixing ratio, it is preferable that a molar ratio (Li/P) of a content of Li to a content of P and a molar ratio (S/P) of a content of S to the content of P in the sulfide-based inorganic solid electrolyte material described below is in a range described below.

In addition, as (ii) the manufacturing method, it is preferable to use a device where an inner wall surface is a smooth surface having a low surface roughness. Examples of the device where the inner wall surface is a smooth surface include a device 10 described below.

In the sulfide-based inorganic solid electrolyte material according to the present embodiment, a particle size d₅₀ at which a cumulative frequency in a volume-based cumulative frequency distribution curve measured using a laser diffraction scattering particle size distribution analyzer is 50% is 0.1 um or more, preferably 1 um or more, more preferably 2 um or more, still more preferably 3 um or more, still more preferably 5 um or more, still more preferably 10 um or more, still more preferably 15 µm or more, still more preferably 20 um or more, still more preferably 30 um or more, still more preferably 40 um or more, still more preferably 50 um or more, still more preferably 60 um or more, and still more preferably 70 um or more. By adjusting the particle size d₅₀ of the sulfide-based inorganic solid electrolyte material to be the lower limit or more, the lithium ionic conductivity of the obtained solid electrolyte membrane can be further improved.

In addition, the particle size d₅₀ is 100 um or less, preferably 95 um or less, more preferably 90 um or less, still more preferably 85 um or less, still more preferably 80 um or less, and still more preferably 75 um or less. By adjusting the particle size d₅₀ of the sulfide-based inorganic solid electrolyte material to be the upper limit or less, excellent handling properties can be maintained.

It is preferable that the sulfide-based inorganic solid electrolyte material according to the present embodiment is a powdery sulfide-based inorganic solid electrolyte material including Li, P, and S as constituent elements.

From the viewpoint of further improving the lithium ionic conductivity, the electrochemical stability, and the stability and the handling properties in water or air of the sulfide-based inorganic solid electrolyte material according to the present embodiment, the molar ratio (Li/P) of the content of Li to the content of P in the sulfide-based inorganic solid electrolyte material is preferably 1.0 or higher and 10.0 or lower, more preferably 1.5 or higher and 5.0 or lower, still more preferably 1.8 or higher and 4.5 or lower, still more preferably 2.0 or higher and 4.4 or lower, still more preferably 2.3 or higher and 4.3 or lower, still more preferably 2.8 or higher and 3.8 or lower, still more preferably 3.0 or higher and 3.5 or lower, still more preferably 3.2 or higher and 3.4 or lower, and still more preferably 3.3.

In addition, the molar ratio (S/P) of the content of S to the content of P is preferably 1.0 or higher and 10.0 or lower, more preferably 2.5 or higher and 6.0 or lower, still more preferably 3.0 or higher and 5.0 or lower, still more preferably 3.5 or higher and 4.8 or lower, still more preferably 3.7 or higher and 4.5 or lower, still more preferably 3.9 or higher and 4.1 or lower, and still more preferably 4.0.

Here, the contents of Li, P, and S in the solid electrolyte material according to the present embodiment can be obtained, for example, by ICP emission spectroscopy.

In the sulfide-based inorganic solid electrolyte material according to the present embodiment, the lower limit of the lithium ionic conductivity of the sulfide-based inorganic solid electrolyte material measured using an alternating current impedance method under measurement conditions of 27.0°C, an applied voltage of 10 mV, and a measurement frequency range of 0.1 Hz to 7 MHz is preferably 1.0 × 10⁻⁴ S·cm⁻¹ or higher, more preferably 2.2 × 10⁻⁴ S·cm⁻¹ or higher, still more preferably 2.5 × 10⁻⁴ S·cm⁻¹ or higher, still more preferably 2.8 × 10⁻⁴ S·cm⁻¹ or higher, still more preferably 3.0 × 10⁻⁴ S·cm⁻¹ or higher, still more preferably 5.0 × 10⁻⁴ S·cm⁻¹ or higher, still more preferably 7.0 × 10⁻⁴ S·cm⁻¹ or higher, still more preferably 1.0 × 10⁻³ S·cm⁻¹ or higher, still more preferably 1.2 × 10⁻³ S·cm⁻¹ or higher, and still more preferably 1.5 × 10⁻³ S·cm⁻¹ or higher.

When the lithium ionic conductivity of the sulfide-based inorganic solid electrolyte material according to the present embodiment is the lower limit or higher, an all-solid-state lithium ion battery having further improved battery characteristics can be obtained.

In addition, the upper limit of the lithium ionic conductivity of the sulfide-based inorganic solid electrolyte material is not particularly limited and is, for example, 3.0 × 10⁻³ S·cm⁻¹ or lower.

Examples of the shape of the sulfide-based inorganic solid electrolyte material according to the present embodiment include a particle shape.

The sulfide-based inorganic solid electrolyte material according to the present embodiment is used, for example, as a solid electrolyte layer forming an all-solid-state lithium ion battery.

Examples of the all-solid-state lithium ion battery to which the sulfide-based inorganic solid electrolyte material according to the present embodiment is applied include an all-solid-state lithium ion battery in which a positive electrode layer, a solid electrolyte layer, and a negative electrode layer are stacked in this order. In this case, the solid electrolyte layer is formed of the sulfide-based inorganic solid electrolyte material.

### [Method of manufacturing Sulfide-Based Inorganic Solid Electrolyte Material]

Next, a method of manufacturing a sulfide-based inorganic solid electrolyte material according to the present embodiment will be described.

The method of manufacturing the sulfide-based inorganic solid electrolyte material according to the present embodiment is different from a method of manufacturing a sulfide-based inorganic solid electrolyte material in the related art. In the sulfide-based inorganic solid electrolyte material according to the present embodiment where the attachment area to the SUS304 plate is in the above-described range, it is important to highly control manufacturing conditions such as a composition ratio of the sulfide-based inorganic solid electrolyte material or a condition that an inorganic composition as a raw material is vitrified.

More specifically, the sulfide-based inorganic solid electrolyte material according to the present embodiment can be obtained using a manufacturing method including steps (A) and (B) described below. In addition, the method of manufacturing a sulfide-based inorganic solid electrolyte material according to the present embodiment may further include a step (C) described below.

Step (A): a step of preparing an inorganic composition including two or more kinds of inorganic compounds as raw materials
Step (B): a step of obtaining a sulfide-based inorganic solid electrolyte material by mechanically processing the inorganic composition such that the inorganic composition is vitrified while the inorganic compounds as the raw materials chemically react each other
a step (C): a step of crushing, classifying, or granulating the obtained sulfide-based inorganic solid electrolyte material

Hereinafter, each of the steps will be described in detail.

### (Step (A) of Preparing Inorganic Composition)

First, an inorganic composition including two or more kinds of inorganic compounds as raw materials is prepared.

As the inorganic compounds, two or more compounds that chemically react with each other by a mechanical process to form a sulfide-based inorganic solid electrolyte material including Li, P, and S as constituent elements are used. These inorganic compounds can be appropriately selected according to the sulfide-based inorganic solid electrolyte material to be formed. For example, lithium sulfide, phosphorus sulfide, or lithium nitride can be used.

The inorganic composition can be obtained, for example, by mixing the two or more inorganic compounds as raw materials at a predetermined molar ratio such that the sulfide-based inorganic solid electrolyte material to be formed has a desired composition ratio.

A method of mixing the two or more inorganic compounds is not particularly limited as long as it is a mixing method capable of uniformly mixing the respective inorganic compounds. For example, the inorganic compounds can be mixed using a mortar, a ball mill, a beads mill, a vibrating mill, an impact crushing device, a mixer (for example, a pug mixer, a ribbon mixer, a tumbler mixer, a drum mixer, or a V-type mixer), an air flow grinder, or the like.

Mixing conditions such as a stirring rate, a processing time, a temperature, a reaction pressure, or a gravitational acceleration applied to the mixture during the mixing of the respective inorganic compounds can be appropriately determined depending on the amount of the mixture processed.

The lithium sulfide used as a raw material is not particularly limited, and a commercially available lithium sulfide may be used. For example, lithium sulfide obtained by reaction of lithium hydroxide and hydrogen sulfide may also be used. From the viewpoint of obtaining the high-purity sulfide-based inorganic solid electrolyte material and suppressing a side reaction, it is preferable that lithium sulfide having little impurities is used.

Here, in the present embodiment, examples of the lithium sulfide include lithium polysulfide.

The phosphorus sulfide used as a raw material is not particularly limited. For example, commercially available phosphorus sulfide (for example, P₂S₅, P₄S₃, P₄S₇, or P₄S₅) can be used. From the viewpoint of obtaining the high-purity sulfide-based inorganic solid electrolyte material and suppressing a side reaction, it is preferable that phosphorus sulfide having little impurities is used. In addition, instead of phosphorus sulfide, elemental phosphorus (P) and elemental sulfur (S) at the corresponding molar ratio can also be used. As the elemental phosphorus (P) and the elemental sulfur (S), any phosphorus and any sulfur can be used without any particular limitation as long as they are industrially produced and are commercially available.

As the inorganic compound as a raw material, lithium nitride may also be used. Here, nitrogen in the lithium nitride is discharged into the system as N₂. Therefore, by using lithium nitride as an inorganic compound that is a raw material, only the Li composition can be increased with respect to the sulfide-based inorganic solid electrolyte material including Li, P, and S as constituent elements.

The lithium nitride according to the present embodiment is not particularly limited, and a commercially available lithium nitride (for example, Li₃N) may be used. For example, lithium nitride obtained by reaction of metallic lithium (for example, Li foil) and nitrogen gas may also be used. From the viewpoint of obtaining the high-purity solid electrolyte material and suppressing a side reaction, it is preferable that lithium nitride having little impurities is used.

### (Step (B) of Vitrifying Inorganic Composition)

Next, a sulfide-based inorganic solid electrolyte material is obtained by mechanically processing the inorganic composition such that the raw material composition is vitrified while the inorganic compounds as the raw materials chemically react each other.

Here, the mechanical process refers to a process of causing two or more kinds of inorganic compounds as raw materials to mechanically collide with each other to vitrify the inorganic composition while a chemical reaction, for example, a mechanochemical process.

Here, the mechanochemical process refers to a method of vitrifying a mixing target while applying a mechanical energy such as a shear force, an impact force, or a centrifugal force. Examples of a device for performing the vitrification through the mechanochemical process include: a crusher and disperser such as a ball mill, a beads mill, a vibrating mill, a turbo mill, a mechano-fusion, a disc mill, or a roll mill; and an impact crushing device including a mechanism as a combination of rotation, extrusion, and impact represented by a rock drill, a vibration drill, or an impact driver. As the impact crushing device including a mechanism as a combination of rotation, extrusion, and impact, it is preferable to use the device 10 described below from the viewpoint of achieving the object of the present application.

In addition, it is preferable that the mechanochemical process is performed in an inert atmosphere. As a result, a reaction of the inorganic composition with water vapor, oxygen, or the like can be suppressed.

In addition, the inert atmosphere refers to a vacuum atmosphere or an inert gas atmosphere. In the inert atmosphere, in order to avoid contact with water, the dew point is preferably -50°C or lower and more preferably -60°C or lower. The inert gas atmosphere refers to an atmosphere of inert gas such as argon gas, helium gas, or nitrogen gas. In order to prevent impurities from being mixed in a product, it is preferable that the purity of the inert gas is as high as possible. A method of introducing the inert gas into the mixed system is not particularly limited as long as it is a method capable of filling the mixed system with the inert gas atmosphere. Examples of the introduction method include a method of purging inert gas and a method of continuously introducing inert gas at a given flow rate.

In addition, when the inorganic composition is vitrified, the vitrification may be performed in a state where an aprotic organic solvent such as hexane, toluene, or xylene is added to disperse the respective raw materials in the solvent.

Mixing conditions such as a rotation speed, a processing time, a temperature, a reaction pressure, or a gravitational acceleration applied to the inorganic composition during the vitrification of the inorganic composition can be appropriately determined based on the kind of the inorganic composition or the amount thereof processed. In general, as the rotation speed increases, the glass production rate increases, and as the processing time increases, the glass conversion rate increases.

Typically, when X-ray diffraction analysis is performed using CuKα rays as a radiation source, if a diffraction peak derived from the inorganic composition is lost or decreases, it can be determined that the inorganic composition is vitrified and a desired sulfide-based inorganic solid electrolyte material is obtained.

### (Device 10)

Here, the device 10 that is preferably used for manufacturing the sulfide-based inorganic solid electrolyte material according to the present embodiment will be described using the drawings.

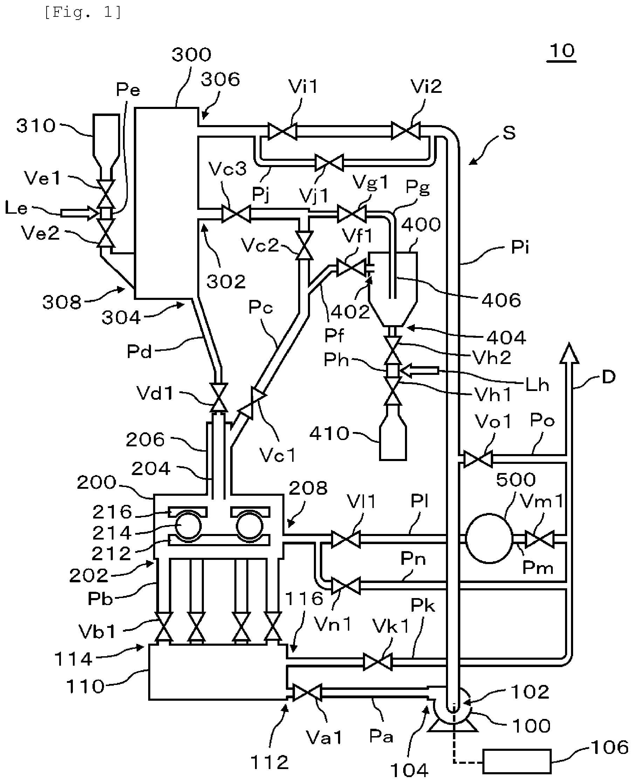

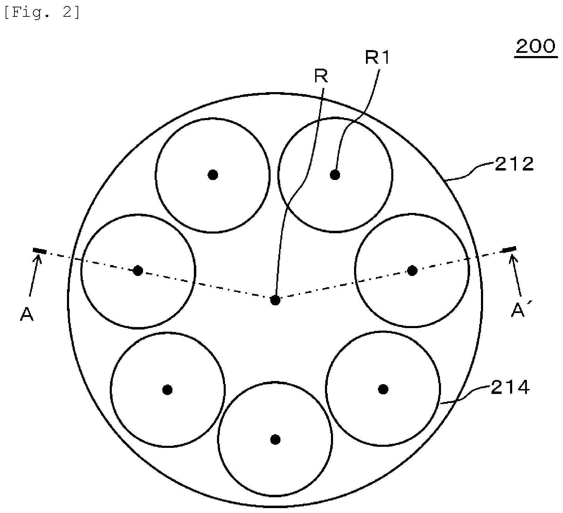

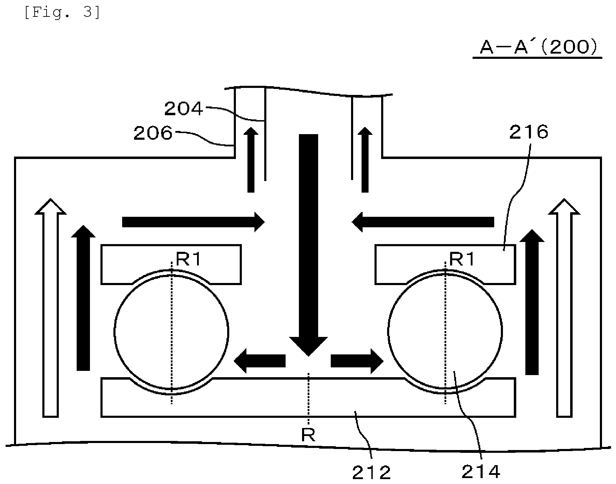

Fig. 1 is a diagram showing the device 10 for manufacturing the sulfide-based inorganic solid electrolyte material according to the present embodiment. Fig. 2 is a top view showing a rotating table 212 and a plurality of balls 214 of a crushing unit 200 shown in Fig. 1. Fig. 3 is a cross-sectional view taken along line A-A' of Fig. 2. The device 10 manufactures a sulfide-based inorganic solid electrolyte material from a plural kinds of inorganic compounds (A1). In Fig. 1, an upward direction of Fig. 1 refers to an upward direction with respect to the vertical direction, and a downward direction of Fig. 1 refers to a downward direction with respect to the vertical direction. For description, Fig. 2 does not show a pressing unit 216. In Fig. 3, a black arrow shows a flow of the plural kinds of inorganic compounds (A1). In Fig. 3, a white arrow shows a flow of inert gas.

The summary of the device 10 will be described using Fig. 1. The device 10 includes a blowing unit 100, a crushing unit 200, a first recovery unit 300, and a system S. The blowing unit 100 blows inert gas. The crushing unit 200 repeats an operation of vitrifying the plural kinds of inorganic compounds (A1) using mechanical energy and an operation of blowing up the plural kinds of vitrified inorganic compounds (A1) with the inert gas blown by the blowing unit 100. The first recovery unit 300 receives entry of at least a part of the plural kinds of inorganic compounds (A1) blown by the inert gas. The first recovery unit 300 returns at least the part of the plural kinds of inorganic compounds (A1) to the crushing unit 200. The system S (for example, a pipe Pa, a buffer tank 110, a pipe Pb, a pipe Pc, and a pipe Pi described below) circulates the inert gas from the blowing unit 100 to the blowing unit 100 through the crushing unit 200 and the first recovery unit 300.

At this time, when the device inner wall surface of the crushing unit 200 is a smooth surface having a low arithmetic mean roughness Ra, the sulfide-based inorganic solid electrolyte material where the attachment area obtained using the above-described (method) is 10% or less can be obtained.

The reason is not clear but is considered to be that, when the device inner wall surface of the crushing unit 200 is a smooth surface having a low arithmetic mean roughness Ra, the attachment and deposition of the unreacted raw material composition and the sulfide-based inorganic solid electrolyte material to and on the device inner wall surface is prevented and the unreacted raw material composition and the sulfide-based inorganic solid electrolyte material are likely to be put into the crushing unit 200. As a result, it is considered that the mechanochemical process of the unreacted raw material composition and the sulfide-based inorganic solid electrolyte material is likely to progress, and the raw material composition can be prevented from being recovered in an unreacted state. Further, it is considered that the device for manufacturing a sulfide-based inorganic solid electrolyte material where improvement of recovery yield or uniformization of physical property values of products during manufacturing can be realized can be obtained.

Specifically, the upper limit of an arithmetic mean roughness Ra of a device inner wall surface of the crushing unit 200 measured according to JIS B 0601 (2013) is preferably 0.02 um, more preferably 0.015 um, still more preferably 0.01 um, and still more preferably 0.005 um.

In addition, the lower limit of the arithmetic mean roughness Ra of the device inner wall surface of the crushing unit 200 is not particularly limited and is, for example, 0 um or more, 0.001 um or more, and 0.003 um or more.

As an attachment prevention technique in the related art, blasting or the like for forming fine unevenness on a surface is used. However, it is known that the effect of preventing attachment to raw material mixed powder of the sulfide-based inorganic solid electrolyte material cannot be obtained. The reason is not clear but is considered to be that P₂S₅ as a raw material of the sulfide-based inorganic solid electrolyte material is highly reactive and unstable ionic crystal powder and has high chemical affinity to a metal plate used on a device inner wall surface. It is considered that the surface area of the device inner wall surface increases due to the presence of the fine unevenness in a metal plate surface portion used for the device inner wall surface such that the raw material mixed powder of the sulfide-based inorganic solid electrolyte material is strongly attached to and deposited on the device inner wall surface.

On the other hand, in the device according to the present embodiment, the surface area of the device inner wall surface can be reduced by reducing the fine unevenness of the metal plate surface used for the device inner wall surface to obtain a smooth surface, and the progress of a chemical reaction of the raw material mixed powder of the sulfide-based inorganic solid electrolyte material and the metal plate can be suppressed. As a result, it is considered that the attachment and deposition of the raw material mixed powder of the sulfide-based inorganic solid electrolyte material to and on the device inner wall surface can be prevented.

The arithmetic mean roughness Ra of the device inner wall surface can be reduced as described above by performing a well-known polishing treatment on the metal plate surface portion used for the device inner wall surface. Examples of the well-known polishing treatment include buffing.

In addition, in the device 10, the upper limit of a maximum height Rz of the device inner wall surface of the crushing unit 200 measured according to JIS B 0601 (2013) is preferably 0.16 um, more preferably 0.13 um, still more preferably 0.10 um, and still more preferably 0.05 um. By adjusting the maximum height Rz of the device inner wall surface of the crushing unit 200 to be the upper limit or less, the attachment and deposition of the raw material mixed powder of the sulfide-based inorganic solid electrolyte material to and on the device inner wall surface can be more suitably prevented, the recovery yield during manufacturing can be improved, and a variation in the lithium ionic conductivity of the obtained sulfide-based inorganic solid electrolyte material depending on manufacturing batches can be further reduced.

In addition, the lower limit of the maximum height Rz of the device inner wall surface of the crushing unit 200 is not particularly limited and is, for example, 0 um or more, 0.01 um or more, and 0.03 um or more.

In addition, in the device 10, the upper limit of a ten-point average roughness Rzjis of the device inner wall surface of the crushing unit 200 measured according to JIS B 0601 (2013) is preferably 0.14 um, more preferably 0.10 um, still more preferably 0.07 um, and still more preferably 0.04 um. By adjusting the ten-point average roughness Rzjis of the device inner wall surface of the crushing unit 200 to be the upper limit or less, the attachment and deposition of the raw material mixed powder of the sulfide-based inorganic solid electrolyte material to and on the device inner wall surface can be more suitably prevented, the recovery yield during manufacturing can be improved, and a variation in the lithium ionic conductivity of the obtained sulfide-based inorganic solid electrolyte material depending on manufacturing batches can be further reduced.

In addition, the lower limit of the ten-point average roughness Rzjis of the device inner wall surface of the crushing unit 200 is not particularly limited and is, for example, 0 um or more, 0.01 um or more, and 0.03 um or more.

Hereinafter, a structure of the device 10 will be described in more detail using Fig. 1.

The device 10 includes the blowing unit 100, the buffer tank 110, the crushing unit 200, the first recovery unit 300, a first container 310, a second recovery unit 400, a second container 410, a pressure reduction unit 500, the pipe Pa, a plurality of pipes Pb (fifth pipe), the pipe Pc (second pipe), a pipe Pd (sixth pipe), a pipe Pe (first pipe), a pipe Pf (third pipe), a pipe Pg, a pipe Ph (fourth pipe), the pipe Pi, a pipe Pj, a pipe Pk, a pipe Pl, a pipe Pm, a pipe Pn, a pipe Po, a valve Va1, a plurality of valves Vb1 (fifth valve), a valve Vc1, a valve Vc2 (second valve), a valve Vc3, a valve Vd1 (sixth valve), a valve Ve1 (first valve), a valve Ve2, a valve Vf1 (third valve), a valve Vg1, a valve Vh1, a valve Vh2, a valve Vi1, a valve Vi2, a valve Vj1, a valve Vk1, a valve Vl1, a valve Vm1, a valve Vn1, a valve Vo1, a line Le (first line), a line Lh (second line), and an exhaust duct D.

The pipe Pa is connected to a gas outlet 104 of the blowing unit 100 and a gas inlet 112 of the buffer tank 110. The valve Va1 is provided in the pipe Pa.

The plurality of pipes Pb are connected to a plurality of gas outlets 114 of the buffer tank 110 and a plurality of gas inlets 202 of the crushing unit 200, respectively. The plurality of valves Vb1 are provided in the plurality of pipes Pb, respectively. For example, when seen from the top of the rotating table 212 (the details will be described below) of the crushing unit 200, the plurality of pipes Pb are disposed around the rotating table 212. Specifically, the plurality of pipes Pb are disposed to be rotationally symmetrical to each other with respect to the center (rotation axis R described below) of the rotating table 212.

The pipe Pc is connected to a material discharge pipe 206 of the crushing unit 200 and a suction port 302 of the first recovery unit 300. The valve Vc1, the valve Vc2, and the valve Vc3 are provided in the pipe Pc and are arranged in this order from the material discharge pipe 206 of the crushing unit 200 to the suction port 302 of the first recovery unit 300.

The pipe Pd is connected to a material supply pipe 204 of the crushing unit 200 and a material discharge port 304 of the first recovery unit 300. The valve Vd1 is provided in the pipe Pd.

The pipe Pe is connected to the first container 310 and a material supply port 308 of the first recovery unit 300. The valve Ve1 and the valve Ve2 are provided in the pipe Pe and are arranged in this order from the first container 310 to the material supply port 308 of the first recovery unit 300. In addition, the valve Ve1 is detachably attached to the pipe Pe together with the first container 310. In other words, when the valve Ve1 is detached from the pipe Pe, the first container 310 and the valve Ve1 can be integrated. Further, the pipe Pe is connected to the line Le between the valve Ve1 and the valve Ve2. The inside of the pipe Pe can be replaced with a vacuum or inert gas through the line Le. That is, the line Le can reduce the internal pressure of the pipe Pe and can introduce inert gas into the pipe Pe.

The pipe Pf is connected to a portion of the pipe Pc positioned between the valve Vc1 and the valve Vc2 (that is, between the crushing unit 200 and the valve Vc2) and a suction port 402 of the second recovery unit 400. The valve Vf1 is provided in the pipe Pf.

The pipe Pg is connected to a gas discharge pipe 406 of the second recovery unit 400 and a portion of the pipe Pc positioned between the valve Vc2 and the valve Vc3. The valve Vg1 is provided in the pipe Pg.

The pipe Ph is connected to the second container 410 and a material discharge port 404 of the second recovery unit 400. The valve Vh1 and the valve Vh2 are provided in the pipe Ph and are arranged in this order from the second container 410 to the material discharge port 404 of the second recovery unit 400. Further, the pipe Ph is connected to the line Lh between the valve Vh1 and the valve Vh2. The inside of the pipe Ph can be replaced with a vacuum or inert gas through the line Lh. That is, the line Lh can reduce the internal pressure of the pipe Ph and can introduce inert gas into the pipe Ph.

The pipe Pi is connected to a gas exhaust port 306 of the first recovery unit 300 and a gas inlet 102 of the blowing unit 100. The valve Vi1 and the valve Vi2 are provided in the pipe Pi, and are arranged in this order from the gas exhaust port 306 of the first recovery unit 300 to the gas inlet 102 of the blowing unit 100.

The pipe Pj is connected to a portion of the pipe Pi positioned between the gas exhaust port 306 of the first recovery unit 300 and the valve Vi1 and a portion of the pipe Pi positioned between the gas inlet 102 of the blowing unit 100 and the valve Vi2. The valve Vj1 is provided in the pipe Pj.

The pipe Pk is connected to an adjustment port 116 of the buffer tank 110 and an exhaust duct D. The valve Vk1 is provided in the pipe Pk.

The pipe Pl is connected to a gas exhaust port 208 of the crushing unit 200 and the pressure reduction unit 500. The valve Vl1 is provided in the pipe Pl.

The pipe Pm is connected to the pressure reduction unit 500 and the exhaust duct D. The valve Vm1 is provided in the pipe Pm.

The pipe Pn is connected to the exhaust duct D and a portion of the pipe Pl positioned between the gas exhaust port 208 of the crushing unit 200 and the valve Vl1. The valve Vn1 is provided in the pipe Pn.

The pipe Po is branched from the pipe Pi and is connected to the exhaust duct D. Specifically, the pipe Pi includes a portion that is connected to an end portion of the pipe Pj positioned between the valve Vi2 and the gas inlet 102 of the blowing unit 100. The pipe Po is connected to the exhaust duct D and a portion of the pipe Pi positioned between the above-described portion and the gas inlet 102 of the blowing unit 100. The valve Vo1 is provided in the pipe Po.

The blowing unit 100 sucks gas in the pipe Pj through the gas inlet 102 of the blowing unit 100. In addition, the blowing unit 100 discharges, through the gas outlet 104 of the blowing unit 100, the gas sucked through the gas inlet 102 of the blowing unit 100. This way, the blowing unit 100 blows the gas to the buffer tank 110 through the pipe Pa. In addition, the rotation speed of a motor of the blowing unit 100 can be changed by an inverter 106, and the flow rate of the gas sent from the blowing unit 100 can be freely changed depending on the rotation speed of the motor.

The gas sent from the blowing unit 100 through the pipe Pa enters the gas inlet 112 of the buffer tank 110. The gas in the buffer tank 110 passes through the plurality of gas outlets 114 of the buffer tank 110 and is sent to the crushing unit 200 through the plurality of pipes Pb. The pressure of the gas in the buffer tank 110 is adjusted by the valve Vk1.

The gas sent from the buffer tank 110 through the plurality of pipes Pb enters the plurality of gas inlets 202 of the crushing unit 200. A material sent from the first container 310 through the pipe Pe, the first recovery unit 300, and the pipe Pd enters the material supply pipe 204 of the crushing unit 200. At least a part of the material and at least a part of the gas in the crushing unit 200 are discharged through the material discharge pipe 206 of the crushing unit 200. The internal pressure of the crushing unit 200 can be reduced by the pressure reduction unit 500. In addition, the gas in the crushing unit 200 can be discharged to the exhaust duct D through the pipe Pn.

The first recovery unit 300 sucks the material and the gas in the pipe Pc through the suction port 302 of the first recovery unit 300. In addition, the first recovery unit 300 discharges, through the material discharge port 304 of the first recovery unit 300, the material sucked through the suction port 302 of the first recovery unit 300. This way, the first recovery unit 300 sends the material to the crushing unit 200 through the pipe Pd. In addition, the first recovery unit 300 discharges, through the gas exhaust port 306 of the first recovery unit 300, the gas sucked through the suction port 302 of the first recovery unit 300. This way, the first recovery unit 300 sends the gas to the blowing unit 100 through the pipe Pi. The first recovery unit 300 is, for example, a dust collector.

The second recovery unit 400 sucks the material and the gas in the pipe Pc and the pipe Pf through the suction port 402 of the second recovery unit 400. In addition, the second recovery unit 400 discharges, through the material discharge port 404 of the second recovery unit 400, the material sucked through the suction port 402 of the second recovery unit 400. This way, the second recovery unit 400 sends the material to the second container 410 through the pipe Ph. In addition, the second recovery unit 400 discharges, through the gas discharge pipe 406 of the second recovery unit 400, the gas sucked through the suction port 402 of the second recovery unit 400. The second recovery unit 400 is, for example, a cyclone dust collector.

Here, in the device 10 according to the present embodiment, even a device inner wall surface of a portion through which powder can pass is preferably a smooth surface having a low arithmetic mean roughness. By adopting the above-described configuration, a variation in the lithium ionic conductivity of the obtained sulfide-based inorganic solid electrolyte material depending on manufacturing batches can be further reduced. Examples of the portion through which powder can pass include the first recovery unit, the second recovery unit, the first container, the second container, the first pipe, the second pipe, the third pipe, the fourth pipe, the fifth pipe, and the sixth pipe.

Specifically, the upper limit of an arithmetic mean roughness Ra of a device inner wall surface measured according to JIS B 0601 (2013) in portions of one unit or two or more units selected from the first recovery unit, the second recovery unit, the first container, the second container, the first pipe, the second pipe, the third pipe, the fourth pipe, the fifth pipe, and the sixth pipe is preferably 0.02 um, more preferably 0.015 um, still more preferably 0.01 um, and still more preferably 0.005 um. By adjusting the arithmetic mean roughness Ra to be the upper limit or less, the attachment and deposition of the raw material mixed powder of the sulfide-based inorganic solid electrolyte material to and on the device inner wall surface can be more suitably prevented, the recovery yield during manufacturing can be improved, and a variation in the lithium ionic conductivity of the obtained sulfide-based inorganic solid electrolyte material depending on manufacturing batches can be further reduced.

In addition, the lower limit of the arithmetic mean roughness Ra is not particularly limited and is, for example, 0 µm or more, 0.001 um or more, and 0.003 um or more.

In the device 10 according to the present embodiment, the upper limit of a maximum height Rz of a device inner wall surface measured according to JIS B 0601 (2013) in portions of one unit or two or more units selected from the first recovery unit, the second recovery unit, the first container, the second container, the first pipe, the second pipe, the third pipe, the fourth pipe, the fifth pipe, and the sixth pipe is preferably 0.16 um, more preferably 0.13 um, still more preferably 0.10 um, and still more preferably 0.05 um. By adjusting the maximum height Rz to be the upper limit or less, the attachment and deposition of the raw material mixed powder of the sulfide-based inorganic solid electrolyte material to and on the device inner wall surface can be more suitably prevented, the recovery yield during manufacturing can be improved, and a variation in the lithium ionic conductivity of the obtained sulfide-based inorganic solid electrolyte material depending on manufacturing batches can be further reduced.

In addition, the lower limit of the maximum height Rz is not particularly limited and is, for example, 0 µm or more, 0.01 µm or more, and 0.03 µm or more.

In the device 10 according to the present embodiment, the upper limit of a ten-point average roughness Rzjis of a device inner wall surface measured according to JIS B 0601 (2013) in portions of one unit or two or more units selected from the first recovery unit, the second recovery unit, the first container, the second container, the first pipe, the second pipe, the third pipe, the fourth pipe, the fifth pipe, and the sixth pipe is preferably 0.14 µm, more preferably 0.10 um, still more preferably 0.07 µm, and still more preferably 0.04 um. By adjusting the ten-point average roughness Rzjis to be the upper limit or less, the attachment and deposition of the raw material mixed powder of the sulfide-based inorganic solid electrolyte material to and on the device inner wall surface can be more suitably prevented, the recovery yield during manufacturing can be improved, and a variation in the lithium ionic conductivity of the obtained sulfide-based inorganic solid electrolyte material depending on manufacturing batches can be further reduced.

In addition, the lower limit of the ten-point average roughness Rzjis is not particularly limited and is, for example, 0 µm or more, 0.01 um or more, and 0.03 um or more.

Next, a structure of the crushing unit 200 will be described using Figs. 2 and 3.

The crushing unit 200 includes the rotating table 212, the plurality of balls 214, and the pressing unit 216. In the example shown in Fig. 2, the number of the plurality of balls 214 is 7. However, the number of the plurality of balls 214 is not limited to the example shown in Fig. 2.

The rotating table 212 is rotatable around the rotation axis R. The rotation axis R of the rotating table 212 passes through the center of the rotating table 212 in a height direction (thickness direction) of the rotating table 212. The height direction (thickness direction) of the rotating table 212 is along the vertical direction. The plurality of balls 214 are disposed around the rotation axis R of the rotating table 212. Specifically, the plurality of balls 214 are disposed to be rotationally symmetrical to each other with respect to the rotation axis R. The plurality of balls 214 rotate together with the rotation of the rotating table 212. In addition, the plurality of balls 214 are individually rotatable around rotation axes R1 that rotate together with the rotation of the rotating table 212. The rotation axis R1 of each of the balls 214 passes through the center of the ball 214 in the height direction (thickness direction) of the ball 214. The height direction (thickness direction) of the ball 214 is along the vertical direction. The pressing unit 216 presses the plurality of balls 214 to the rotating table 212 from a side opposite to the rotating table 212.

Next, an example of a method of manufacturing a sulfide-based inorganic solid electrolyte material from the plural kinds of inorganic compounds (A1) using the device 10 will be described using Figs. 1 to 4.

The valve Ve1 and the valve Ve2 are closed such that the first container 310 contains the plural kinds of inorganic compounds (A1). Specifically, first, the first container 310 is detached from the pipe Pe together with the valve Ve1. Next, the first container 310 contains the plural kinds of inorganic compounds (A1). The containing of the plural kinds of inorganic compounds (A1) is implemented in an atmosphere (for example, in a glove box) controlled by the inert gas. Next, in a state where the valve Ve1 is closed, the first container 310 and the valve Ve1 are attached to the pipe Pe. In this case, even when the first container 310 and the valve Ve1 are exposed to the atmosphere, by closing the valve Ve1, the plural kinds of inorganic compounds (A1) in the first container 310 can be prevented from being exposed to the atmosphere (air). In addition, when the first container 310 is attached, the atmosphere in the pipe Pe can be replaced with the inert gas through the line Le connected to the pipe Pe. As a result, when the inorganic compounds (A1) pass through the pipe Pe, the inorganic compounds (A1) can be prevented from being exposed to the atmosphere (air). Next, the valve Ve1, the valve Ve2, and the valve Vd1 are opened such that the plural kinds of inorganic compounds (A1) are sent from the first container 310 to the crushing unit 200 through the pipe Pe, the first recovery unit 300, and the pipe Pd. That is, the first container 310 contains the plural kinds of inorganic compounds (A1) supplied to the crushing unit 200.

Further, the valve Ve1, the valve Ve2, the valve Vf1, the valve Vg1, the valve Vh1, the valve Vh2, the valve Vj1, the valve Vl1, the valve Vm1, the valve Vn1, and the valve Vo1 are closed and the valve Va1, the valves Vb1, the valve Vc1, the valve Vc2, the valve Vc3, the valve Vd1, the valve Vi1, and the valve Vi2 are opened such that the inert gas is supplied to a portion of the pipe Pi positioned between the valve Vi1 and the valve Vi2. Next, the blowing unit 100 is operated while adjusting the internal pressure of the buffer tank 110 using the valve Vk1. As a result, the system S, that is, the system from the blowing unit 100 to the blowing unit 100 through the pipe Pa, the buffer tank 110, the pipe Pb, the crushing unit 200, the pipe Pc, the first recovery unit 300, and the pipe Pi circulates the inert gas and is closed from the outside (that is, the system S is prevented from being exposed to the atmosphere (air)).

The supply of the inert gas to the portion of the pipe Pi positioned between the valve Vi1 and the valve Vi2 may be performed before or after supplying the plural kinds of inorganic compounds (A1) from the first container 310 to the crushing unit 200 or may be performed while supplying the plural kinds of inorganic compounds (A1) from the first container 310 to the crushing unit 200. In addition, the position where the inert gas is supplied does not need to be the portion of the pipe Pi positioned between the valve Vi1 and the valve Vi2 and may be any portion in the system S. Further, the inert gas may be supplied to a plurality of portions in the system S (including the portion of the pipe Pi positioned between the valve Vi1 and the valve Vi2).

Examples of the inert gas introduced into the device 10 include nitrogen gas. The nitrogen gas is supplied, for example, from a nitrogen gas container through a nitrogen purifier. In this example, the impurity concentration (for example, the water concentration or the oxygen concentration) in the nitrogen gas can be reduced. For example, the water concentration in the nitrogen gas can be made to be 400 ppm or less, preferably 40 ppm or less, and more preferably 2 ppm or less, and the oxygen concentration in the nitrogen gas can be made to be 400 ppm or less, preferably 40 ppm or less, and more preferably 2 ppm or less. However, the inert gas may be gas other than nitrogen gas, for example, argon gas.

Further, the crushing unit 200 is operated. Specifically, by rotating the rotating table 212 around the rotation axis R and rotating each of the balls 214 around the rotation axis R1, the plurality of balls 214 are pressed to the rotating table 212 by the pressing unit 216. The operation of the crushing unit 200 may start before or after supplying the plural kinds of inorganic compounds (A1) from the first container 310 to the crushing unit 200 or may start while supplying the plural kinds of inorganic compounds (A1) from the first container 310 to the crushing unit 200. Using the following method, the crushing unit 200 repeats an operation of vitrifying the plural kinds of inorganic compounds (A1) using mechanical energy and an operation of blowing up the plural kinds of vitrified inorganic compounds (A1) with the inert gas blown by the blowing unit 100.

First, as indicated by the black arrow extending from the material supply pipe 204 to the rotating table 212 in Fig. 3, the plural kinds of inorganic compounds (A1) supplied from the first container 310 arrive at the center of the rotating table 212 or the periphery thereof (the rotation axis R and the periphery thereof) through the material supply pipe 204.

Next, as indicated by two black arrows extending from the periphery of the center (rotation axis R) of the rotating table 212 to both sides in Fig. 3, the plural kinds of inorganic compounds (A1) move from the center (rotation axis R) of the rotating table 212 to the balls 214 due to a centrifugal force generated by the rotation of the rotating table 212, and enters a gap between the rotating table 212 and the balls 214. The plural kinds of inorganic compounds (A1) in the gap between the rotating table 212 and the balls 214 are vitrified by mechanical energy. Specifically, shearing stress and compressive stress are applied to the plural kinds of inorganic compounds (A1) in the gap between the rotating table 212 and the balls 214 due to the rotation of the balls 214 and the press of the balls 214 to the rotating table 212 by the pressing unit 216. The plural kinds of inorganic compounds (A1) are vitrified by the shearing stress and the compressive stress. That is, mechanical milling is performed on the plural kinds of inorganic compounds (A1).

As indicated by two white arrows positioned on both sides of the rotating table 212, the plurality of balls 214, and the pressing unit 216 in Fig. 3, on the outside of the rotating table 212, the flow of the inert gas from the lower side to the upper side of the crushing unit 200 is generated. This flow is generated by the inert gas sent from the blowing unit 100 through the gas inlets 202 of the crushing unit 200. As indicated by two black arrows positioned on both sides of the plurality of balls 214 and the pressing unit 216 in Fig. 3, the plural kinds of vitrified inorganic compounds (A1) are blown up with the inert gas. At this time, the rotation speed of the motor of the blowing unit 100 is suppressed to be low by the inverter 106. As a result, the flow rate of the inert gas sent from the blowing unit 100 to the crushing unit 200 is suppressed to be low, and the inorganic compounds (A1) are prevented from exiting from the material discharge pipe 206.

As indicated by two black arrows extending from the outside of the rotating table 212 to the center of the rotating table 212 on the pressing unit 216 in Fig. 3, a part of the plural kinds of inorganic compounds (A1) blown up with the inert gas moves from the outside of the rotating table 212 to the center of the rotating table 212 above the pressing unit 216. As in the plural kinds of inorganic compounds (A1) supplied from the material supply pipe 204, the plural kinds of inorganic compounds (A1) arrive at the center of the rotating table 212 or the periphery thereof (the rotation axis R and the periphery thereof). Next, mechanical milling is performed on the plural kinds of inorganic compounds (A1) in the same aspect as that described above.

As indicated by two black arrows extending to the upper side of the pressing unit 216 above the pressing unit 216 in Fig. 3, another part of the plural kinds of inorganic compounds (A1) blown up with the inert gas can enter into the material discharge pipe 206 without returning to the rotating table 212. For example, the plural kinds of inorganic compounds (A1) having a small particle size are likely to enter into the material discharge pipe 206 without returning to the rotating table 212. The plural kinds of inorganic compounds (A1) in the material discharge pipe 206 are sent to the first recovery unit 300 through the pipe Pc, are sent from the first recovery unit 300 to the material supply pipe 204 of the crushing unit 200 through the pipe Pd, and return to the rotating table 212. Accordingly, even on the plural kinds of inorganic compounds (A1) in the material discharge pipe 206, mechanical milling can be performed again by the crushing unit 200.

While performing mechanical milling of the crushing unit 200, as described above, the system S, that is the system from the blowing unit 100 to the blowing unit 100 through the pipe Pa, the buffer tank 110, the pipe Pb, the crushing unit 200, the pipe Pc, the first recovery unit 300, and the pipe Pi circulates the inert gas and is closed from the outside. Accordingly, contact between the plural kinds of inorganic compounds (A1) and air can be reduced.

By performing mechanical milling on the plural kinds of inorganic compounds (A1) using the crushing unit 200, the plural kinds of inorganic compounds (A1) are vitrified, and the sulfide-based inorganic solid electrolyte material is manufactured from the plural kinds of inorganic compounds (A1).

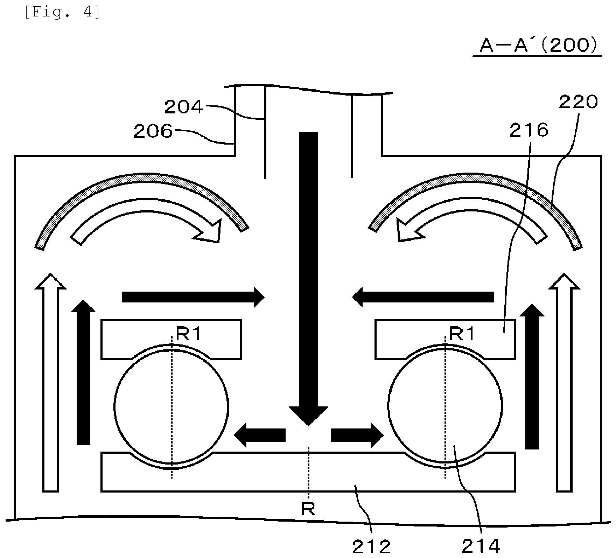

Fig. 4 is a diagram showing a modification example of Fig. 3.

The crushing unit 200 may further include a cover unit 220. The cover unit 220 is positioned above the pressing unit 216. As indicated by white arrows extending along the cover unit 220 in Fig. 4, the cover unit 220 directs the flow of the inert gas, with which the plural kinds of inorganic compounds (A1) are blown up, to the center of the crushing unit 200 (the rotation axis R of the rotating table 212) and a downward direction of the crushing unit 200. In this case, as compared to a case where the cover unit 220 is not provided, the amount of the plural kinds of inorganic compounds (A1) that are blown up with the inert gas to enter the material discharge pipe 206 can be reduced, and the amount of the plural kinds of inorganic compounds (A1) that are blown up with the inert gas to return to the rotating table 212 can be increased. Accordingly, as compared to a case where the cover unit 220 is not provided, the efficiency of mechanical milling of the crushing unit 200 can be improved.

Next, an example of a method of taking out the sulfide-based inorganic solid electrolyte material from the device 10 will be described.

The valve Vc2 is closed, the valve Vf1 and the valve Vg1 are opened, and the inverter 106 connected to the motor of the blowing unit 100 is controlled to increase the rotation speed of the motor of the blowing unit 100 such that the flow rate of the inert gas sent to the gas inlets 202 of the crushing unit 200 increases (at this stage, the valve Vh1 and the valve Vh2 are closed). By increasing the flow rate of the inert gas sent to the gas inlets 202 of the crushing unit 200, the sulfide-based inorganic solid electrolyte material blown up with the inert gas in the crushing unit 200 is sent into the material discharge pipe 206 without substantially or completely returning to the rotating table 212. The sulfide-based inorganic solid electrolyte material sent into the material discharge pipe 206 enters the suction port 402 of the second recovery unit 400 through the pipe Pc and the pipe Pf. As a result, the sulfide-based inorganic solid electrolyte material is recovered by the second recovery unit 400. Next, the valve Vh1 and the valve Vh2 are opened. As a result, the sulfide-based inorganic solid electrolyte material that is recovered by the second recovery unit 400 enters the second container 410 through the pipe Ph. Next, the valve Vh1 and the valve Vh2 are closed. Next, the second container 410 is detached from the pipe Ph. In this case, the valve Vh1 and the valve Vh2 are closed such that the inside of the pipe Ph can be prevented from being exposed to the atmosphere (air). When the second container 410 is attached to the pipe Ph again, the atmosphere in the pipe Ph can be replaced with the inert gas through the line Lh connected to the pipe Ph. As a result, when the sulfide-based inorganic solid electrolyte material passes through the pipe Ph, the sulfide-based inorganic solid electrolyte material can be prevented from being exposed to the atmosphere (air).

Next, an example of the operation of the pressure reduction unit 500 will be described.

The inside of the crushing unit 200 may be exposed to the atmosphere (gas), for example, when an internal component (for example, the rotating table 212, the balls 214, or the pressing unit 216) of the crushing unit 200 is cleaned. In this case, by reducing the internal pressure of the crushing unit 200 using the pressure reduction unit 500, the air in the crushing unit 200 can be removed. For example, by closing the plurality of valves Vb1, the valve Vc1, the valve Vd1, and the valve Vn1 and opening the valve Vl1 and the valve Vm1, the pressure reduction unit 500 can be operated.

The sulfide-based inorganic solid electrolyte material manufactured using the device 10 according to the present embodiment can be recovered without being attached to the device inner wall surface. Therefore, the amount of the unreacted raw material composition in the sulfide-based inorganic solid electrolyte material can be reduced, and thus a sulfide-based inorganic solid electrolyte material having a small variation in lithium ionic conductivity depending on manufacturing batches and having excellent stability can be manufactured.

The device 10 according to the present embodiment can be used not only for manufacturing the sulfide-based inorganic solid electrolyte material as in the present embodiment but also for manufacturing other well-known inorganic materials. Examples of the well-known inorganic materials include an oxide-based inorganic solid electrolyte material, other lithium-based inorganic solid electrolyte materials, and a positive electrode active material and a negative electrode active material described below.

Examples of the oxide-based inorganic solid electrolyte material include: a NASICON type such as LiTi₂(PO₄)₃, LiZr₂(PO₄)₃, or LiGe₂(PO₄)_{3;} a perovskite type such as (La_{0.5+x}Li_{0.5-3x})TiO₃; a Li₂O-P₂O₅ material; and a Li₂O-P₂O₅-Li₃N material.

Examples of the other lithium-based inorganic solid electrolyte material include LiPON, LiNbO₃, LiTaO₃, Li₃PO₄, LiPO₄₋ₓNₓ (x satisfies 0 < x ≤ 1), LiN, LiI, and LISICON. Further, a glass ceramic obtained by precipitating crystal of the inorganic solid electrolytes can also be used as the inorganic solid electrolyte material.

### (Step (C) of Crushing, Classifying, or Granulating)

In the method of manufacturing the sulfide-based inorganic solid electrolyte material according to the present embodiment, optionally, the step of crushing, classifying, or granulating the obtained sulfide-based inorganic solid electrolyte material may be further performed. For example, by crushing the sulfide-based inorganic solid electrolyte material into fine particles and adjusting the particle size thereof through a classification operation or a granulation operation, a sulfide-based inorganic solid electrolyte material having a desired particle size can be obtained. The above-described crushing method is not particularly limited, and a well-known crushing method such as a mixer, an air flow grinder, a mortar, a tumbling mill, or a coffee mill can be used. In addition, the above-described classification method is not particularly limited, and a well-known method such as a sieve can be used.

From the viewpoint of avoiding contact with water in air, it is preferable that crushing or classification is performed in an inert gas atmosphere or a vacuum atmosphere.

### [Solid Electrolyte Membrane]

Next, a solid electrolyte membrane according to the present embodiment will be described.

The solid electrolyte membrane according to the present embodiment includes the sulfide-based inorganic solid electrolyte material according to the present embodiment as a main component.

The solid electrolyte membrane according to the present embodiment is used, for example, as a solid electrolyte layer forming an all-solid-state lithium ion battery.

Examples of the all-solid-state lithium ion battery to which the solid electrolyte membrane according to the present embodiment is applied include an all-solid-state lithium ion battery in which a positive electrode layer, a solid electrolyte layer, and a negative electrode layer are stacked in this order. In this case, the solid electrolyte layer is formed of the solid electrolyte membrane.

The average thickness of the solid electrolyte membrane according to the present embodiment is preferably 5 um or more and 500 um or less, more preferably 10 um or more and 200 um or less, and still more preferably 20 um or more and 100 um or less. When the average thickness of the solid electrolyte membrane is the lower limit or more, the loss of the sulfide-based inorganic solid electrolyte material or the cracking of the solid electrolyte membrane surface can be further suppressed. In addition, when the average thickness of the solid electrolyte membrane is the upper limit or less, the impedance of the solid electrolyte membrane can be further decreased. As a result, the battery characteristics of the obtained all-solid-state lithium ion battery can be further improved.

The solid electrolyte membrane according to the present embodiment is preferably a compact obtained by compression-molding a powdery sulfide-based inorganic solid electrolyte material. That is, it is preferable that the particle-shaped inorganic solid electrolyte material is compression-molded to obtain a solid electrolyte membrane having a given strength due to the anchor effect between the inorganic solid electrolyte materials.

By forming the compact, the inorganic solid electrolyte materials bind to each other, and the strength of the obtained solid electrolyte membrane can be further improved. As a result, the loss of the inorganic solid electrolyte material or the cracking of the inorganic solid electrolyte material surface can be further suppressed.

The content of the sulfide-based inorganic solid electrolyte material according to the present embodiment in the solid electrolyte membrane according to the present embodiment is preferably 98 mass% or more, more preferably 99 mass% or more, and still more preferably 100 mass% with respect to 100 mass% of the total mass of the solid electrolyte membrane. As a result, the contact between the inorganic solid electrolyte materials can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be further improved.

The planar shape of the solid electrolyte membrane is not particularly limited and can be appropriately selected according to the shape of an electrode layer or a current collector layer. For example, the planar shape can be rectangular.

In addition, the solid electrolyte membrane according to the present embodiment may include a binder resin. The content of the binder resin is preferably lower than 0.5 mass%, more preferably 0.1 mass% or less, still more preferably 0.05 mass% or less, and still more preferably 0.01 mass% or less with respect to 100 mass% of the total mass of the solid electrolyte membrane. In addition, it is more preferable that the solid electrolyte membrane according to the present embodiment does not substantially include the binder resin, and it is most preferable that the solid electrolyte membrane according to the present embodiment does not include the binder resin.

As a result, the contact between the solid electrolyte materials can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be improved.

"Substantially not including the binder resin" represents that the binder resin may be included to the extent that the effect of the present embodiment does not deteriorate, and the content thereof may be, for example, 0.005 mass% or 0.001 mass%. In addition, when an adhesive resin layer is provided between the solid electrolyte layer and the positive electrode layer or the negative electrode layer, an adhesive resin derived from the adhesive resin layer present in the vicinity of an interface between the solid electrolyte layer and the adhesive resin layer is excluded from "the binder resin in the solid electrolyte membrane".

The binder resin refers to a binder that is generally used for a lithium ion battery to bind the solid electrolyte materials to each other. Examples of the binder resin include polyvinyl alcohol, polyacrylic acid, carboxymethyl cellulose, polytetrafluoroethylene, polyvinylidene fluoride, styrenebutadiene rubber, and polyimide.

The solid electrolyte membrane according to the present embodiment can be obtained, for example, by depositing the powdery sulfide-based inorganic solid electrolyte material on a cavity surface of a mold or a substrate surface deposited in a film shape and subsequently compress-molding the sulfide-based inorganic solid electrolyte material in a film shape.

A method of compress-molding the sulfide-based inorganic solid electrolyte material is not particularly limited. For example, when the powdery sulfide-based inorganic solid electrolyte material is deposited on a cavity surface of a mold, pressing by a mold and a stamp can be used. When the powdery sulfide-based inorganic solid electrolyte material is deposited on a substrate surface, pressing, roll pressing, or flat pressing by a mold and a stamp can be used.

The pressure at which the sulfide-based inorganic solid electrolyte material is compressed is, for example, 10 MPa or higher or 500 MPa or lower.

In addition, optionally, the sulfide-based inorganic solid electrolyte material deposited in a film shape may be compressed and heated. The sulfide-based inorganic solid electrolyte materials are fused and bound to each other by performing the heating and compressing bonding, and the strength of the obtained solid electrolyte membrane can be further improved. As a result, the loss of the sulfide-based inorganic solid electrolyte material or the cracking of the sulfide-based inorganic solid electrolyte material surface can be further suppressed.

The temperature at which the sulfide-based inorganic solid electrolyte material is heated is, for example, 40°C or higher and 500°C or lower.

### [All-Solid-State Lithium Ion Battery]

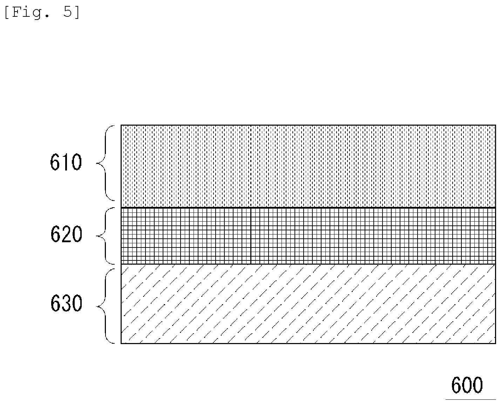

Next, an all-solid-state lithium ion battery 600 according to the present embodiment will be described. Fig. 5 is a cross-sectional view schematically showing an example of a structure of the all-solid-state lithium ion battery 600 according to the embodiment of the present invention. The all-solid-state lithium ion battery 600 according to the present embodiment is a lithium ion secondary battery but may be a lithium ion primary battery.

In the all-solid-state lithium ion battery 600 according to the present embodiment, a positive electrode layer 610, a solid electrolyte layer 620, and a negative electrode layer 630 are stacked in this order. The solid electrolyte layer 620 is formed of the solid electrolyte membrane according to the present embodiment.

In addition, the all-solid-state lithium ion battery 600 according to the embodiment can also be a bipolar lithium ion battery in which two or more unit cells each of which includes the positive electrode layer 610, the solid electrolyte layer 620, and the negative electrode layer 630 are stacked.

The shape of the all-solid-state lithium ion battery 600 is not particularly limited and may be a cylindrical shape, a coin shape, a square shape, a film shape, or any other shape.

The all-solid-state lithium ion battery 600 according to the present embodiment is manufactured using a generally well-known method. For example, the all-solid-state lithium ion battery 600 is prepared by forming a laminate including the positive electrode layer 610, the solid electrolyte layer 620, and the negative electrode layer 630 in a cylindrical shape, a coin shape, a square shape, a film shape, or any other shape.

The positive electrode layer 610 is not particularly limited, and a positive electrode layer that is generally used for an all-solid-state lithium ion battery can be used. The positive electrode layer 610 is not particularly limited and can be manufactured using a generally well-known method. For example, the positive electrode layer 610 can be obtained by forming the positive electrode active material layer including the positive electrode active material on the current collector such as aluminum foil.

The thickness or density of the positive electrode active material layer is appropriately determined depending on the intended use of the battery and thus is not particularly limited. The thickness or density can be set based on generally well-known information.

The positive electrode active material layer includes the positive electrode active material.

The positive electrode active material is not particularly limited, and a generally well-known positive electrode active material that can be used for a positive electrode layer of an all-solid-state lithium ion battery can be used. For example, a composite oxide such as a lithium cobalt oxide (LiCoO₂), a lithium nickel oxide (LiNiO₂), a lithium manganese oxide (LiMn₂O₄), a solid solution oxide (Li₂MnO₃-LiMO₂ (M=Co, Ni, or the like)), lithium-manganese- nickel oxide (LiNi_{1/3}Mn_{1/3}Co_{1/3}O₂), or an olivine-type lithium phosphate (LiFePO₄); a conductive polymer such as polyaniline or polypyrrole; a sulfide-based positive electrode active material such as Li₂S, CuS, a Li-Cu-S compound, TiS₂, FeS, MoS₂, a Li-Mo-S compound, a Li-Ti-S compound, or a Li-V-S compound; or a material including sulfur as an active material such as acetylene black impregnated with sulfur, porous carbon impregnated with sulfur, or mixed powder including sulfur and carbon can be used. Among these positive electrode active materials, one kind may be used singly, or two or more kinds may be used in combination.

Among these, from the viewpoints of obtaining higher discharge capacity density and obtaining higher cycle characteristics, a sulfide-based positive electrode active material is preferable, and one kind or two or more kinds selected from a Li-Mo-S compound, a Li-Ti-S compound, and a Li-V-S compound are more preferable.

Here, the Li-Mo-S compound includes Li, Mo, and S as constituent elements, and can be typically obtained by mixing and crushing molybdenum sulfide and lithium sulfide as raw materials through a mechanochemical process or the like.

In addition, the Li-Ti-S compound includes Li, Ti, and S as constituent elements, and can be typically obtained by mixing and crushing titanium sulfide and lithium sulfide as raw materials through a mechanochemical process or the like.

The Li-V-S compound includes Li, V, and S as constituent elements, and can be typically obtained by mixing and crushing vanadium sulfide and lithium sulfide as raw materials through a mechanochemical process or the like.

The positive electrode active material layer is not particularly limited and may include, as components other than the positive electrode active material, for example, one or two or more materials selected from a solid electrolyte material, a binder, a conductive auxiliary agent, and the like.

The mixing ratio between various materials in the positive electrode active material layer is appropriately determined depending on the intended use of the battery and thus is not particularly limited. The mixing ratio can be set based on generally well-known information.

The negative electrode layer 630 is not particularly limited, and a negative electrode layer that is generally used for an all-solid-state lithium ion battery can be used. The negative electrode layer 630 is not particularly limited and can be manufactured using a generally well-known method. For example, the negative electrode layer 630 can be obtained by forming the negative electrode active material layer including the negative electrode active material on the current collector such as copper foil.

The thickness or density of the negative electrode active material layer is appropriately determined depending on the intended use of the battery and thus is not particularly limited. The thickness or density can be set based on generally well-known information.

The negative electrode active material layer includes the negative electrode active material.

The negative electrode active material is not particularly limited, and a generally well-known negative electrode active material that can be used for a negative electrode layer of an all-solid-state lithium ion battery can be used. Examples of the negative electrode active material include: a carbon material such as natural graphite, artificial graphite, resinous coal, carbon fiber, activated charcoal, hard carbon, or soft carbon; a metal material mainly formed of tin, a tin alloy, silicon, a silicon alloy, gallium, a gallium alloy, indium, an indium alloy, aluminum, or an aluminum alloy; a conductive polymer such as polyacene, polyacetylene, or polypyrrole; metallic lithium; and a lithium titanium composite oxide (for example, Li₄Ti₅O₁₂). Among these negative electrode active materials, one kind may be used singly, or two or more kinds may be used in combination.

The negative electrode active material layer is not particularly limited and may include, as components other than the negative electrode active material, for example, one or two or more materials selected from a solid electrolyte material, a binder, a conductive auxiliary agent, and the like.

The mixing ratio between various materials in the negative electrode active material layer is appropriately determined depending on the intended use of the battery and thus is not particularly limited. The mixing ratio can be set based on generally well-known information.

Hereinabove, the embodiment of the present invention has been described with reference to the drawings. However, the embodiment is merely an example of the present invention, and various configurations other than the above-described configurations can also be adopted.

### Examples

Hereinafter, the present invention will be described in more detail using Examples and Comparative Examples. However, the present invention is not limited to these Examples and Comparative Examples.

First, using test pieces of Examples A to C and Comparative Examples A to G, the attachment of raw material mixed powder to the device inner wall surface was evaluated.

### [1] Raw Material Mixed Powder of Sulfide-Based Inorganic Solid Electrolyte Material

Regarding the raw materials, Li₂S (manufactured by Furukawa Co., Ltd., purity: 99.9%), P₂S₅ (manufactured by Kanto Chemical Co., Inc.), and Li₃N (manufactured by Furukawa Co., Ltd.) were used, respectively.

These powders were mixed at a molar ratio of 71.0:23.7:5.3 to obtain raw material mixed powder of a sulfide-based inorganic solid electrolyte material.

### [2] Test Piece

It is considered that, when a satisfactory result can be obtained for the attachment and deposition of the raw material mixed powder to and on a plate formed of the same material as that of the device inner wall surface, the same result can also be obtained in the device according to the present embodiment. Accordingly, a test piece simulating the device inner wall surface was prepared using the same SUS304 as the material used for the device inner wall surface. A method of preparing the test piece will be shown below.

### <Example A>

A test piece (W: 100 mm × D: 100 mm × H: 2 mm) prepared using SUS304 was buffed using a #800 abrasive to prepare a test piece 1. When the buffed surface of the test piece 1 was measured according to JIS B 0601 (2013), an arithmetic mean roughness Ra was 0.005 um, a maximum height Rz was 0.030 um, and a ten-point average roughness Rzjis was 0.026 µm.

### <Example B>

A test piece (W: 100 mm × D: 100 mm × H: 2 mm) prepared using SUS304 was buffed using a #800 abrasive to prepare a test piece 2. When the buffed surface of the test piece 2 was measured according to JIS B 0601 (2013), an arithmetic mean roughness Ra was 0.010 um, a maximum height Rz was 0.065 um, and a ten-point average roughness Rzjis was 0.058 um.

### <Example C>

A test piece (W: 100 mm × D: 100 mm × H: 2 mm) prepared using SUS304 was buffed using a #800 abrasive to prepare a test piece 3. When the buffed surface of the test piece 3 was measured according to JIS B 0601 (2013), an arithmetic mean roughness Ra was 0.020 µm, a maximum height Rz was 0.160 µm, and a ten-point average roughness Rzjis was 0.140 µm.

### <Comparative Example A>

A test piece (W: 100 mm × D: 100 mm × H: 2 mm) prepared using SUS304 was buffed using a #800 abrasive. The buffed test piece was blasted under conditions of an average particle size of shots: 2 µm, a spraying pressure: 0.5 MPa, a spraying distance: 300 mm, and a spraying angle: 90° to prepare a test piece 4. When the blasted surface of the test piece 4 was measured according to JIS B 0601 (2013), an arithmetic mean roughness Ra was 3.0 um, a maximum height Rz was 18.8 um, and a ten-point average roughness Rzjis was 17.0 um.

### <Comparative Example B>

A test piece (W: 100 mm × D: 100 mm × H: 2 mm) prepared using SUS304 was buffed using a #800 abrasive. The buffed test piece was blasted under conditions of an average particle size of shots: 1 µm, a spraying pressure: 0.5 MPa, a spraying distance: 300 mm, and a spraying angle: 90° to prepare a test piece 5. When the blasted surface of the test piece 5 was measured according to JIS B 0601 (2013), an arithmetic mean roughness Ra was 1.5 um, a maximum height Rz was 7.0 um, and a ten-point average roughness Rzjis was 6.1 µm.

### <Comparative Example C>

A test piece (W: 100 mm × D: 100 mm × H: 2 mm) prepared using SUS304 was buffed using a #800 abrasive. The buffed test piece was blasted under conditions of an average particle size of shots: 0.8 um, a spraying pressure: 0.5 MPa, a spraying distance: 300 mm, and a spraying angle: 90° to prepare a test piece 6. When the blasted surface of the test piece 6 was measured according to JIS B 0601 (2013), an arithmetic mean roughness Ra was 1.0 µm, a maximum height Rz was 5.7 um, and a ten-point average roughness Rzjis was 4.6 µm.

### <Comparative Example D>

A test piece (W: 100 mm × D: 100 mm × H: 2 mm) prepared using SUS304 was buffed using a #800 abrasive. The buffed test piece was blasted under conditions of an average particle size of shots: 0.3 um, a spraying pressure: 0.5 MPa, a spraying distance: 300 mm, and a spraying angle: 90° to prepare a test piece 7. When the blasted surface of the test piece 7 was measured according to JIS B 0601 (2013), an arithmetic mean roughness Ra was 0.5 um, a maximum height Rz was 2.4 um, and a ten-point average roughness Rzjis was 2.1 µm.

### <Comparative Example E>

A test piece (W: 100 mm × D: 100 mm × H: 2 mm) prepared using SUS304 was buffed using a #800 abrasive. The buffed test piece was blasted under conditions of an average particle size of shots: 0.2 um, a spraying pressure: 0.5 MPa, a spraying distance: 300 mm, and a spraying angle: 90° to prepare a test piece 8. When the blasted surface of the test piece 8 was measured according to JIS B 0601 (2013), an arithmetic mean roughness Ra was 0.3 um, a maximum height Rz was 1.6 um, and a ten-point average roughness Rzjis was 1.2 µm.

### <Comparative Example F>

A test piece (W: 100 mm × D: 100 mm × H: 2 mm) prepared using SUS304 was buffed using a #800 abrasive. The buffed test piece was blasted under conditions of an average particle size of shots: 0.05 um, a spraying pressure: 0.5 MPa, a spraying distance: 300 mm, and a spraying angle: 90° to prepare a test piece 9. When the blasted surface of the test piece 9 was measured according to JIS B 0601 (2013), an arithmetic mean roughness Ra was 0.1 um, a maximum height Rz was 0.6 um, and a ten-point average roughness Rzjis was 0.5 µm.

### <Comparative Example G>

A test piece (W: 100 mm × D: 100 mm × H: 2 mm) prepared using SUS304 was buffed using a #800 abrasive. The buffed test piece was blasted under conditions of an average particle size of shots: 0.01 um, a spraying pressure: 0.5 MPa, a spraying distance: 300 mm, and a spraying angle: 90° to prepare a test piece 10. When the blasted surface of the test piece 10 was measured according to JIS B 0601 (2013), an arithmetic mean roughness Ra was 0.05 um, a maximum height Rz was 0.29 um, and a ten-point average roughness Rzjis was 0.24 µm.

### [3] Screening Test

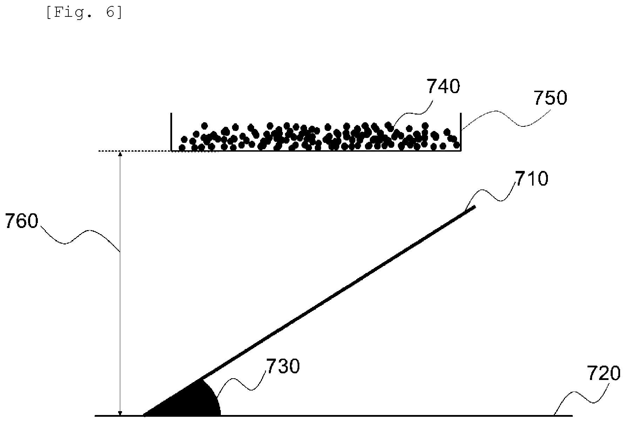

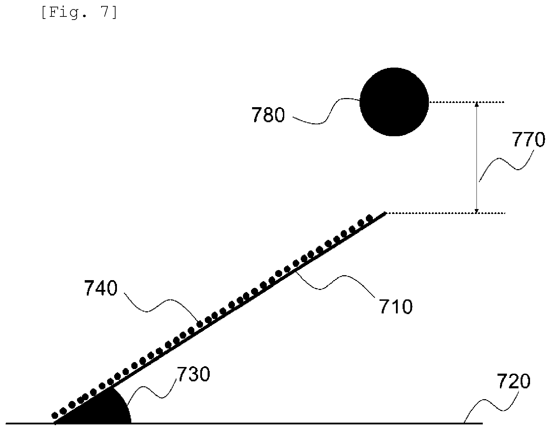

In the device according to the present embodiment, for example, in each of the pipes or the containers, it is considered that most of the sulfide-based inorganic solid electrolyte material or a raw material mixture is continuously in contact with the device inner wall surface. Accordingly, in Examples A to C and Comparative Examples A to G, when the raw material mixed powder of the sulfide-based inorganic solid electrolyte material was screened out to the test piece simulating the device inner wall surface, a screening test of evaluating the deposition and attachment status of the raw material mixed powder to the test piece was performed. Hereinafter, Fig. 6 is a schematic diagram showing the screening of raw material mixed powder 740 of the sulfide-based inorganic solid electrolyte material, and Fig. 7 is a schematic diagram showing a state where impact is applied to by a zirconia ball 780. A measurement method of the screening test that was performed on the test piece will be described with reference to Figs. 6 and 7.

First, a test piece 710 formed in Examples A to C and Comparative Examples A to G was placed on a jig provided on a horizontal plane 720. At this time, an angle of the test piece 710 with respect to the horizontal plane 720 was adjusted to 45°. Next, using a sieve 750 having a mesh size of 250 um, 10 g of the raw material mixed powder 740 of the sulfide-based inorganic solid electrolyte material was screened out from a height 760 of 10 cm from the horizontal plane 720 such that the raw material mixed powder 740 of the sulfide-based inorganic solid electrolyte material was applied to the entire test piece 710. Further, 47 g of one zirconia ball 780 (manufactured by Nikkato Corporation, a spherical shape having a diameter of 2.5 cm) was dropped three times from a height 770 of 5 cm from an upper end of the test piece 710 to impact only the upper end of the test piece 710 without impacting a surface of the test piece 710 to which the raw material mixed powder 740 of the sulfide-based inorganic solid electrolyte material was attached. As a result, the impact was applied to the test piece 710. Finally, the impacted surface of the test piece 710 to which the raw material mixed powder 740 of the sulfide-based inorganic solid electrolyte material was attached was imaged with a camera, a powder-attached portion and a non-attached portion are separated from the image by image processing software Paint.net (v 4.2.16), the area of the powder-attached portion was measured by image analysis software ImageJ (1.52a), and a ratio (attachment area) of the area of the powder-attached portion to the area of a single surface of the test piece 710 was calculated, and the attachment area was evaluated based on the following three stages.
a: the attachment area of the sulfide-based inorganic solid electrolyte material to the area of the surface of the test piece to which the sulfide-based inorganic solid electrolyte material was attached was 10% or less
b: the attachment area of the sulfide-based inorganic solid electrolyte material to the area of the surface of the test piece to which the sulfide-based inorganic solid electrolyte material was attached was 30% or less
c: the attachment area of the sulfide-based inorganic solid electrolyte material to the area of the surface of the test piece to which the sulfide-based inorganic solid electrolyte material was attached was 50% or less

### [4] Pressing Test

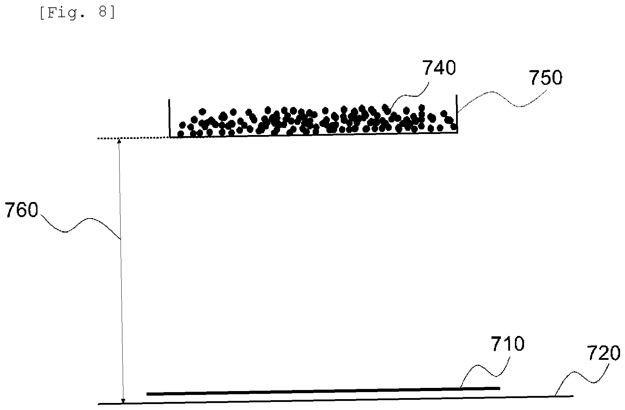

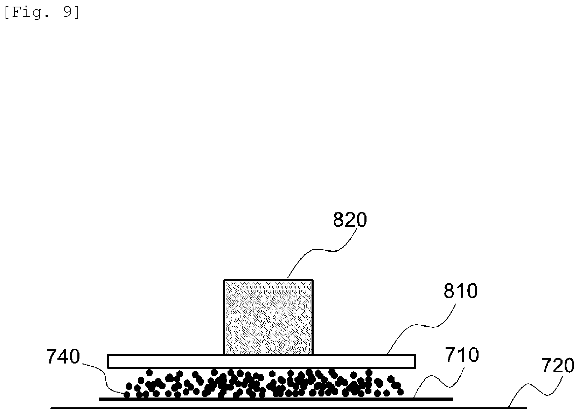

In the device according to the present embodiment, for example, in the crushing unit, it is considered that, since the ball is pressed against the rotating table by the pressing unit, the raw material mixed powder of the sulfide-based inorganic solid electrolyte material is also pressed against the device inner wall surface of the crushing unit, or a given amount of force is applied during the collision of the raw material mixed powder with the device inner wall surface. Accordingly, in Examples A to C and Comparative Examples A to G, a pressing test which evaluated the deposition and attachment status of the raw material mixed powder to the test piece when the raw material mixed powder of the sulfide-based inorganic solid electrolyte material was pressed against the test piece simulating the device inner wall surface with a certain amount of force was performed. Hereinafter, Fig. 8 is a schematic diagram showing the screening of the raw material mixed powder 740 of the sulfide-based inorganic solid electrolyte material, Fig. 9 is a schematic diagram showing the pressing of the raw material mixed powder 740 of the sulfide-based inorganic solid electrolyte material, and Fig. 7 is a schematic diagram showing a state where impact is applied to by the zirconia ball 780. A measurement method of the pressing test that was performed on the test piece will be described with reference to Figs. 7 to 9.

First, the test piece 710 formed in Examples A to C and Comparative Examples A to G was placed on the jig provided on the horizontal plane 720. At this time, the angle of the test piece 710 with respect to the horizontal plane 720 was adjusted to 0° (parallel to the horizontal plane 720). Next, using the sieve 750 having a mesh size of 250 um, 10 g of the raw material mixed powder 740 of the sulfide-based inorganic solid electrolyte material was screened out from the height 760 of 10 cm from the horizontal plane 720 such that the raw material mixed powder 740 of the sulfide-based inorganic solid electrolyte material was applied to the entire test piece 710. Further, a backing plate 810 obtained by buffing a SUS304 plate with a #800 abrasive was placed on the raw material mixed powder 740 of the sulfide-based inorganic solid electrolyte material, and 1 kg of a weight 820 was placed thereon and was left to stand for 30 seconds. As a result, the raw material mixed powder 740 of the sulfide-based inorganic solid electrolyte material was pressed against the test piece 710. After leaving to stand, the backing plate 810 and the weight 820 were removed, and the test piece was inclined from 0° to 45° using a jig for 3 seconds. Further, 47 g of one zirconia ball 780 (manufactured by Nikkato Corporation, a spherical shape having a diameter of 2.5 cm) was dropped three times from the height 770 of 5 cm from the upper end of the test piece 710 to impact only the upper end of the test piece 710 without impacting a surface of the test piece 710 to which the raw material mixed powder 740 of the sulfide-based inorganic solid electrolyte material was attached. As a result, the impact was applied to the test piece 710. Finally, the impacted surface of the test piece 710 to which the raw material mixed powder 740 of the sulfide-based inorganic solid electrolyte material was attached was imaged with a camera, a powder-attached portion and a non-attached portion are separated from the image by image processing software Paint.net (v 4.2.16), the area of the powder-attached portion was measured by image analysis software ImageJ (1.52a), a ratio (attachment area) of the area of the powder-attached portion to the area of a single surface of the test piece 710 was calculated, and the attachment area was evaluated based on the following three stages.
a: the attachment area of the sulfide-based inorganic solid electrolyte material to the area of the surface of the test piece to which the sulfide-based inorganic solid electrolyte material was attached was 10% or less
b: the attachment area of the sulfide-based inorganic solid electrolyte material to the area of the surface of the test piece to which the sulfide-based inorganic solid electrolyte material was attached was 30% or less
c: the attachment area of the sulfide-based inorganic solid electrolyte material to the area of the surface of the test piece to which the sulfide-based inorganic solid electrolyte material was attached was 50% or less

**[Table 1]**

| | Example A | Example B | Example C | Comparative Example A | Comparative Example B | Comparative Example C | Comparative Example D | Comparative Example E | Comparative Example F | Comparative Example G |
|---|---|---|---|---|---|---|---|---|---|---|
| Process | #800 Buffing | #800 Buffing | #800 Buffing | #800 Buffing + Blasting | #800 Buffing + Blasting | #800 Buffing + Blasting | #800 Buffing + Blasting | #800 Buffing + Blasting | #800 Buffing + Blasting | #800 Buffing + Blasting |
| Ra [µm] | 0.005 | 0.010 | 0.020 | 3.0 | 1.5 | 1.0 | 0.5 | 0.3 | 0.1 | 0.05 |
| Rz [µm] | 0.030 | 0.065 | 0.160 | 18.8 | 7.0 | 5.7 | 2.4 | 1.6 | 0.6 | 0.29 |
| Rzjis [µm] | 0.026 | 0.058 | 0.140 | 17.0 | 6.1 | 4.6 | 2.1 | 1.2 | 0.5 | 0.24 |
| Screening Test | a | a | a | b | b | b | b | b | b | b |
| Pressing Test | a | a | a | b | b | b | b | b | b | b |

In Examples A to C, most of the raw material mixed powder fell off the test piece after the screening test and the pressing test, which was effective for preventing the attachment of the raw material mixed powder to the device inner wall surface. On the other hand, in Comparative Examples A to G, most of the raw material mixed powder remained in the test piece after the test, and the attachment to the device inner wall surface was likely to occur.

### <Evaluation Method of Sulfide-Based Inorganic Solid Electrolyte Material>

Next, an evaluation method of the sulfide-based inorganic solid electrolyte materials obtained in Example 1 and Comparative Examples 1 to 7 below will be described.

### (1) Particle Size d₅₀

The particle size distribution of a sulfide-based inorganic solid electrolyte material obtained in each of Example 1 and Comparative Examples 1 to 7 was measured with a laser diffraction scattering method using a laser diffraction scattering particle size distribution analyzer (manufactured by Malvern Panalytical Ltd., Mastersizer 3000). Based on the measurement result, a particle size corresponding to a 50% cumulative value in the volume-based cumulative distribution(d₅₀, particle size) of each of the sulfide-based inorganic solid electrolyte materials was obtained.

### (2) Attachment Area

For the sulfide-based inorganic solid electrolyte materials obtained in Example 1 and Comparative Examples 1 to 7, the following screening test was performed. Hereinafter, Fig. 6 is a schematic diagram showing the screening of the sulfide-based inorganic solid electrolyte material 740, and Fig. 7 is a schematic diagram showing a state where impact is applied to by the zirconia ball 780. The description will be made below with reference to Figs. 6 and 7.

A SUS304 where, when measured according to JIS B 0601 (2013), an arithmetic mean roughness Ra was 0.020 um, a maximum height Rz was 0.16 um, and a ten-point average roughness Rzjis was 0.14 um was cut into an 8 cm long × 9 cm wide to be a SUS304 plate 710. Next, the SUS304 plate was provided on a table such that an installation angle 730 with respect to the horizontal plane 720 was 45°. Next, using a sieve 750 having a mesh size of 250 um, 10 g of the sulfide-based inorganic solid electrolyte material 740 obtained in each of Example 1 and Comparative Examples 1 to 7 was screened out from the height 760 of 10 cm from the horizontal plane 720 such that the sulfide-based inorganic solid electrolyte material 740 was applied to the entire SUS304 plate 710. Further, 47 g of one zirconia ball 780 (manufactured by Nikkato Corporation, a spherical shape having a diameter of 2.5 cm) was dropped three times from a height 770 of 5 cm from an upper end of the SUS304 plate 710 to impact only the upper end of the SUS304 plate 710 without impacting a surface of the SUS304 plate 710 to which the sulfide-based inorganic solid electrolyte material 740 was attached. As a result, the impact was applied to the SUS304 plate 710.
Finally, the impacted surface of the SUS304 plate 710 to which the sulfide-based inorganic solid electrolyte material 740 was attached was imaged with a camera, a powder-attached portion and a non-attached portion are separated from the image by image processing software Paint.net (v 4.2.16), the area of the powder-attached portion was measured by image analysis software ImageJ (1.52a), and a ratio (attachment area) of the area of the powder-attached portion to the area 72 cm² of a single surface of the SUS304 plate 710 was calculated.

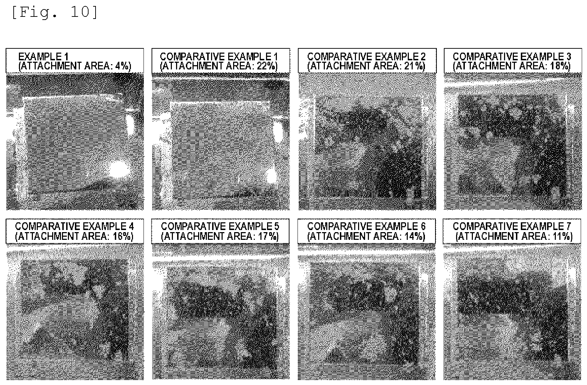

Fig. 10 shows the state of the SUS304 plate and the calculation result of the attachment area after the screening test using the sulfide-based inorganic solid electrolyte materials according to Example 1 and Comparative Examples 1 to 7.

### (3) ICP Emission Spectroscopy

Mass% of each of elements in the sulfide-based inorganic solid electrolyte material obtained in each of Example 1 and Comparative Examples 1 to 7 was measured by ICP Emission Spectroscopy using an ICP emission spectrometer (SPS3000, manufactured by Seiko Instruments Inc.). Based on the mass% of each of elements, a molar ratio between the respective elements was calculated.

### (4) Measurement of Lithium Ionic Conductivity

10 batches of sulfide-based inorganic solid electrolyte materials according to each of Example 1 and Comparative Examples 1 to 7 were prepared, the lithium ionic conductivity was measured in each of the batches using an alternating current impedance method.

For the measurement of the lithium ionic conductivity, a potentiostat/galvanostat SP-300 (manufactured by Bio-Logic Sciences Instruments) was used. The size of the sample was *φ* 9.5 mm and 1.3 mm thick. Measurement conditions were an applied voltage: 10 mV, a measurement temperature: 27.0°C, and a measurement frequency range: 0.1 Hz to 3 MHz, and the electrode was Li foil.

Here, the powdery sulfide-based inorganic solid electrolyte material obtained in each of Example 1 and Comparative Examples 1 to 7 was annealed at 290°C for 2 hours and pressed using a press machine at 270 MPa for 10 minutes, and the plate-shaped sulfide-based inorganic solid electrolyte material having a thickness of 1.3 mm was obtained and used as the sample for the measurement of the lithium ionic conductivity.

Next, in Example 1 and Comparative Examples 1 to 7, the average value of the measured lithium ionic conductivity values of 10 batches of the sulfide-based inorganic solid electrolyte materials was calculated. The average value of 10 batches was set as the lithium ionic conductivity of the sulfide-based inorganic solid electrolyte material according to each of Example 1 and Comparative Examples 1 to 7.

### (5) Evaluation of Stability of Lithium Ionic Conductivity

10 batches of sulfide-based inorganic solid electrolyte materials obtained in each of Example 1 and Comparative Examples 1 to 7 were prepared, the lithium ionic conductivity was measured in each of the batches using the alternating current impedance method described above in (4).

Next, in Example 1 and Comparative Examples 1 to 7, the average value of the measured lithium ionic conductivity values of 10 batches was calculated. Next, the stability of the lithium ionic conductivity values of 10 batches was evaluated based on the following three stages.
A: No measured values that were 0.85 times or more and 1.15 times or less with respect to the average value
B: measured values of 1 to 2 batches were 0.85 times or more and 1.15 times or less with respect to the average value
C: measured values of 3 batches or more were 0.85 times or more and 1.15 times or less with respect to the average value

### <Example 1>

A powdery sulfide-based inorganic solid electrolyte material including Li, P, and S as constituent elements was prepared in the following procedure.

Regarding the raw materials, Li₂S (manufactured by Furukawa Co., Ltd., purity: 99.9%), P₂S₅ (manufactured by Kanto Chemical Co., Inc.), and Li₃N (manufactured by Furukawa Co., Ltd.) were used, respectively.

Next, the respective raw materials were put into the device 10 (when the device inner wall surface was measured according to JIS B 0601 (2013), Ra: 0.005 um, Rz: 0.030 um, and Rzjis: 0.026 µm) such that Li₂S:P₂S₅:Li₃N = 71.0:23.7:5.3 (mol%), and mechanical milling was performed for 70 hours to obtain a sulfide-based inorganic solid electrolyte material.

The obtained sulfide-based inorganic solid electrolyte material was evaluated in various ways. The obtained results are shown in Table 2.

### <Comparative Example 1>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 3.0 µm, Rz: 18.8 um, and Rzjis: 17 um).

The obtained sulfide-based inorganic solid electrolyte material was evaluated in various ways. The obtained results are shown in Table 2.

### <Comparative Example 2>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 1.5 um, Rz: 7.0 um, and Rzjis: 6.1 µm).

The obtained sulfide-based inorganic solid electrolyte material was evaluated in various ways. The obtained results are shown in Table 2.

### <Comparative Example 3>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 1.0 µm, Rz: 5.7 um, and Rzjis: 4.6 um).

The obtained sulfide-based inorganic solid electrolyte material was evaluated in various ways. The obtained results are shown in Table 2.

### <Comparative Example 4>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 0.5 um, Rz: 2.4 um, and Rzjis: 2.1 um).

The obtained sulfide-based inorganic solid electrolyte material was evaluated in various ways. The obtained results are shown in Table 2.

### <Comparative Example 5>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 0.3 um, Rz: 1.6 um, and Rzjis: 1.2 um).

The obtained sulfide-based inorganic solid electrolyte material was evaluated in various ways. The obtained results are shown in Table 2.

### <Comparative Example 6>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 0.1 um, Rz: 0.6 um, and Rzjis: 0.5 um).

The obtained sulfide-based inorganic solid electrolyte material was evaluated in various ways. The obtained results are shown in Table 2.

### <Comparative Example 7>

As raw materials, the same materials as those of Example 1 were used.

Next, a sulfide-based inorganic solid electrolyte material was obtained by performing mechanical milling under the same conditions as those of Example 1, except that the device 10 in Example 1 was changed to a device in the related art (when the device inner wall surface was measured according to JIS B 0601 (2013), Ra: 0.05 um, Rz: 0.29 um, and Rzjis: 0.24 um).

The obtained sulfide-based inorganic solid electrolyte material was evaluated in various ways. The obtained results are shown in Table 2.

**[Table 2]**

| | Example 1 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Ra [µm] | 0.005 | 3.0 | 1.5 | 1.0 | 0.5 | 0.3 | 0.1 | 0.05 |
| Rz [um] | 0.030 | 18.8 | 7.0 | 5.7 | 2.4 | 1.6 | 0.6 | 0.29 |
| Rzjis [µm] | 0.026 | 17.0 | 6.1 | 4.6 | 2.1 | 1.2 | 0.5 | 0.24 |
| Particle Size d₅₀ [µm] | 74 | 95 | 71 | 67 | 76 | 77 | 62 | 49 |
| Attachment Area [%] | 4 | 22 | 21 | 18 | 16 | 17 | 14 | 11 |
| Li/P | 3.3 | 3.3 | 3.3 | 3.3 | 3.3 | 3.3 | 3.3 | 3.3 |
| S/P | 4.0 | 4.0 | 4.0 | 4.0 | 4.0 | 4.0 | 4.0 | 4.0 |
| Lithium Ionic Conductivity [S·cm⁻¹) | 1.5 × 10⁻³ | 1.1 × 10⁻³ | 1.0 × 10⁻³ | 1.1 × 10⁻³ | 1.2 × 10⁻³ | 1.3 × 10⁻³ | 1.3 × 10⁻³ | 1.4 × 10⁻³ |
| Stability | A | C | C | C | C | C | B | B |

This application claims priority based on Japanese Patent Application No. 2021-131099 filed on August 11, 2021 and Japanese Patent Application No. 2021-131100 filed on August 11, 2021, the contents of which are incorporated herein by reference in their entirety.

The present invention also includes the following aspects.
[1] A device for manufacturing an inorganic material, the device including:
   a blowing unit that blows inert gas;
   a crushing unit that repeats an operation of vitrifying plural kinds of inorganic compounds for forming the inorganic material using mechanical energy and an operation of blowing up the plural kinds of vitrified inorganic compounds with the inert gas blown by the blowing unit;
   a first recovery unit that receives entry of at least a part of the plural kinds of inorganic compounds blown up with the inert gas and returns at least the part of the plural kinds of inorganic compounds to the crushing unit; and
   a system that circulates the inert gas from the blowing unit to the blowing unit through the crushing unit and the first recovery unit,
   in which an arithmetic mean roughness Ra of a device inner wall surface of the crushing unit measured according to JIS B 0601 (2013) is 0.02 um or less.
[2] The device according to [1],
   in which a maximum height Rz of the device inner wall surface of the crushing unit measured according to JIS B 0601 (2013) is 0.16 µm or less.
[3] The device according to [1] or [2],
   in which a ten-point average roughness Rzjis of the device inner wall surface of the crushing unit measured according to JIS B 0601 (2013) is 0.14 um or less.
[4] The device according to any one of [1] to [3], further including:
   a first container that contains the plural kinds of inorganic compounds to be supplied to the crushing unit;
   a first pipe that is connected to the first recovery unit and the first container; and
   a first valve that is detachably attached to the first pipe together with the first container.
[5] The device according to [4], further including:
   a first line that introduces inert gas into the first pipe.
[6] The device according to any one of [1] to [5], further including:
   a second recovery unit that receives entry of the inorganic material blown up with the inert gas;
   a second pipe that is connected to the crushing unit and the first recovery unit;
   a second valve that is provided in the second pipe;
   a third pipe that is connected to the second recovery unit and a portion of the second pipe positioned between the crushing unit and the second valve; and
   a third valve that is provided in the third pipe.
[7] The device according to [6], further including:
   a second container that contains the inorganic material recovered by the second recovery unit;
   a fourth pipe that is connected to the second recovery unit and the second container; and
   a second line that introduces inert gas into the fourth pipe.
[8] The device according to any one of [1] to [7], further including:
   a fifth pipe that connects the blowing unit and the crushing unit;
   a fifth valve that is provided in the fifth pipe;
   a sixth pipe that returns at least the part of the plural kinds of inorganic compounds from the first recovery unit to the crushing unit; and
   a sixth valve that is provided in the sixth pipe.
[9] The device according to [8],
   in which an arithmetic mean roughness Ra of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.02 um or less.
[10] The device according to [8] or [9],
   in which a maximum height Rz of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.16 um or less.
[11] The device according to any one of [8] to [10],
   in which a ten-point average roughness Rzjis of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.14 um or less.
[12] The device according to any one of [1] to [11], further including:
   a pressure reduction unit that reduces an internal pressure of the crushing unit.
[13] The device according to any one of [1] to [12],
   in which the crushing unit includes a rotating table, a plurality of balls, and a pressing unit, the plurality of balls being disposed around a rotation axis of the rotating table and being individually rotatable around rotation axes that rotate together with the rotation of the rotating table, and the pressing unit pressing the plurality of balls to the rotating table from a side opposite to the rotating table.
[14] The device according to any one of [1] to [13],
   in which the crushing unit includes a cover unit that directs a flow of the inert gas, with which the plural kinds of inorganic compounds are blown up, to a center of the crushing unit and a downward direction of the crushing unit.
[15] The device according to any one of [1] to [14],
   in which the plural kinds of inorganic compounds include Li.
[16] A method of manufacturing an inorganic material, the method including:
   allowing a blowing unit to blow inert gas;
   allowing a crushing unit to repeat an operation of vitrifying plural kinds of inorganic compounds for forming the inorganic material using mechanical energy and an operation of blowing up the plural kinds of vitrified inorganic compounds with the inert gas blown by the blowing unit;
   returning at least a part of the plural kinds of inorganic compounds that are blown up with the inert gas to enter a first recovery unit to the crushing unit from the first recovery unit; and
   circulating the inert gas from the blowing unit to the blowing unit through the crushing unit and the first recovery unit.

### REFERENCE SIGNS LIST

10 device
100 blowing unit
102 gas inlet
104 gas outlet
106 inverter
110 buffer tank
112 gas inlet
114 gas outlet
116 adjustment port
200 crushing unit
202 gas inlet
204 material supply pipe
206 material discharge pipe
208 gas exhaust port
212 rotating table
214 ball
216 pressing unit
220 cover unit
300 first recovery unit
302 suction port
304 material discharge port
306 gas exhaust port
308 material supply port
310 first container
400 second recovery unit
402 suction port
404 material discharge port
406 gas discharge pipe
410 second container
500 pressure reduction unit
600 all-solid-state lithium ion battery
610 positive electrode layer
620 solid electrolyte layer
630 negative electrode layer
710 SUS340 plate
720 horizontal plane
730 installation angle
740 sulfide-based inorganic solid electrolyte material
750 sieve
760 height from horizontal plane 720
770 height from upper end of SUS304 plate 710
780 zirconia ball
810 backing plate
820 weight
D exhaust duct
Le first line
Lh second line
Pa pipe
Pb fifth pipe
Pc second pipe
Pd sixth pipe
Pe first pipe
Pf third pipe
Pg pipe
Ph fourth pipe
Pi pipe
Pj pipe
Pk pipe
Pl pipe
Pm pipe
Pn pipe
Po pipe
S system
Va1 valve
Vb1 fifth valve
Vc1 valve
Vc2 second valve
Vc3 valve
Vd1 sixth valve
Ve1 first valve
Ve2 valve
Vf1 third valve
Vg1 valve
Vh1 valve
Vh2 valve
Vi1 valve
Vi2 valve
Vj1 valve
Vk1 valve
Vl1 valve
Vm1 valve
Vn1 valve
Vo1 valve

## Claims

1. A sulfide-based inorganic solid electrolyte material where a particle size d₅₀ at which a cumulative frequency in a volume-based cumulative frequency distribution curve measured using a laser diffraction scattering particle size distribution analyzer is 50% is 0.1 um or more and 100 um or less,
wherein an attachment area measured using the following (method) is 10% or less,
(method)
(1) an 8 cm long × 9 cm wide SUS304 plate where, when measured according to JIS B 0601 (2013), an arithmetic mean roughness Ra is 0.017 um or more and 0.023 um or less, a maximum height Rz is 0.14 um or more and 0.18 um or less, and a ten-point average roughness Rzjis is 0.12 um or more and 0.16 um or less is provided such that a vertical side as a tangent line to a horizontal plane is inclined by 45° with respect to the horizontal plane,
(2) using a sieve having a mesh size of 250 um, 10 g of a sulfide-based inorganic solid electrolyte material is screened out to the SUS304 plate from a height of 10 cm from the horizontal plane such that the sulfide-based inorganic solid electrolyte material is applied to the entire SUS304 plate,
(3) 47 g of one zirconia ball is dropped three times from a height of 5 cm from an upper end of the SUS304 plate to impact only the upper end of the SUS304 plate without impacting a surface of the SUS304 plate to which the sulfide-based inorganic solid electrolyte material is attached, and
(4) an area of the impacted surface of the SUS304 plate to which the sulfide-based inorganic solid electrolyte material is attached is measured, and a ratio (attachment area) of the measured area to an area of a single surface of the SUS304 plate is calculated.

2. The sulfide-based inorganic solid electrolyte material according to claim 1, comprising:
Li, P, and S as constituent elements.

3. The sulfide-based inorganic solid electrolyte material according to claim 2,
wherein a molar ratio (Li/P) of a content of Li to a content of P in the sulfide-based inorganic solid electrolyte material is 1.0 or higher and 10.0 or lower, and a molar ratio (S/P) of a content of S to the content of P in the sulfide-based inorganic solid electrolyte material is 1.0 or higher and 10.0 or lower.

4. The sulfide-based inorganic solid electrolyte material according to any one of claims 1 to 3,
wherein a lithium ionic conductivity is 1.0 × 10⁻⁴ S·cm⁻¹ or higher when measured using an alternating current impedance method under measurement conditions of 27.0°C, an applied voltage of 10 mV, and a measurement frequency range of 0.1 Hz to 7 MHz.

5. A solid electrolyte membrane comprising:
the sulfide-based inorganic solid electrolyte material according to any one of claims 1 to 4.

6. An all-solid-state lithium ion battery comprising:
a positive electrode including a positive electrode active material layer;
an electrolyte layer; and
a negative electrode including a negative electrode active material layer,
wherein at least one of the positive electrode active material layer, the electrolyte layer, and the negative electrode active material layer includes the sulfide-based inorganic solid electrolyte material according to any one of claims 1 to 4.

7. A device for manufacturing a sulfide-based inorganic solid electrolyte material, the device comprising:
a blowing unit that blows inert gas;
a crushing unit that repeats an operation of vitrifying plural kinds of inorganic compounds for forming the sulfide-based inorganic solid electrolyte material using mechanical energy and an operation of blowing up the plural kinds of vitrified inorganic compounds with the inert gas blown by the blowing unit;
a first recovery unit that receives entry of at least a part of the plural kinds of inorganic compounds blown up with the inert gas and returns at least the part of the plural kinds of inorganic compounds to the crushing unit; and
a system that circulates the inert gas from the blowing unit to the blowing unit through the crushing unit and the first recovery unit,
wherein an arithmetic mean roughness Ra of a device inner wall surface of the crushing unit measured according to JIS B 0601 (2013) is 0.02 um or less.

8. The device according to claim 7,
wherein a maximum height Rz of the device inner wall surface of the crushing unit measured according to JIS B 0601 (2013) is 0.16 um or less.

9. The device according to claim 7 or 8,
wherein a ten-point average roughness Rzjis of the device inner wall surface of the crushing unit measured according to JIS B 0601 (2013) is 0.14 um or less.

10. The device according to any one of claims 7 to 9, further comprising:
a first container that contains the plural kinds of inorganic compounds to be supplied to the crushing unit;
a first pipe that is connected to the first recovery unit and the first container; and
a first valve that is detachably attached to the first pipe together with the first container.

11. The device according to claim 10, further comprising:
a first line that introduces inert gas into the first pipe.

12. The device according to any one of claims 7 to 11, further comprising:
a second recovery unit that receives entry of the sulfide-based inorganic solid electrolyte material blown up with the inert gas;
a second pipe that is connected to the crushing unit and the first recovery unit;
a second valve that is provided in the second pipe;
a third pipe that is connected to the second recovery unit and a portion of the second pipe positioned between the crushing unit and the second valve; and
a third valve that is provided in the third pipe.

13. The device according to claim 12, further comprising:
a second container that contains the sulfide-based inorganic solid electrolyte material recovered by the second recovery unit;
a fourth pipe that is connected to the second recovery unit and the second container; and
a second line that introduces inert gas into the fourth pipe.

14. The device according to any one of claims 7 to 13, further comprising:
a fifth pipe that connects the blowing unit and the crushing unit;
a fifth valve that is provided in the fifth pipe;
a sixth pipe that returns at least the part of the plural kinds of inorganic compounds from the first recovery unit to the crushing unit; and
a sixth valve that is provided in the sixth pipe.

15. The device according to claim 14,
wherein an arithmetic mean roughness Ra of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.02 um or less.

16. The device according to claim 14 or 15,
wherein a maximum height Rz of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.16 um or less.

17. The device according to any one of claims 14 to 16,
wherein a ten-point average roughness Rzjis of a device inner wall surface measured according to JIS B 0601 (2013) in portions of one unit or two or more units selected from the first recovery unit, a second recovery unit, a first container, a second container, a first pipe, a second pipe, a third pipe, a fourth pipe, the fifth pipe, and the sixth pipe is 0.14 um or less.

18. The device according to any one of claims 7 to 17, further comprising:
a pressure reduction unit that reduces an internal pressure of the crushing unit.

19. The device according to any one of claims 7 to 18,
wherein the crushing unit includes a rotating table, a plurality of balls, and a pressing unit, the plurality of balls being disposed around a rotation axis of the rotating table and being individually rotatable around rotation axes that rotate together with the rotation of the rotating table, and the pressing unit pressing the plurality of balls to the rotating table from a side opposite to the rotating table.

20. The device according to any one of claims 7 to 19,
wherein the crushing unit includes a cover unit that directs a flow of the inert gas, with which the plural kinds of inorganic compounds are blown up, to a center of the crushing unit and a downward direction of the crushing unit.

21. The device according to any one of claims 7 to 20,
wherein the plural kinds of inorganic compounds include Li.

22. A method of manufacturing a sulfide-based inorganic solid electrolyte material, the method comprising:
a step (A): a step of preparing an inorganic composition including two or more kinds of inorganic compounds as raw materials; and
a step (B): a step of obtaining a sulfide-based inorganic solid electrolyte material by mechanically processing the inorganic composition such that the inorganic composition is vitrified while the inorganic compounds as the raw materials chemically react each other,
wherein the step (B) includes
allowing a blowing unit to blow inert gas;
allowing a crushing unit to repeat an operation of vitrifying plural kinds of inorganic compounds for forming the sulfide-based inorganic solid electrolyte material using mechanical energy and an operation of blowing up the plural kinds of vitrified inorganic compounds with the inert gas blown by the blowing unit;
returning at least a part of the plural kinds of inorganic compounds that are blown up with the inert gas to enter a first recovery unit to the crushing unit from the first recovery unit; and
circulating the inert gas from the blowing unit to the blowing unit through the crushing unit and the first recovery unit.

23. The method of manufacturing a sulfide-based inorganic solid electrolyte material according to claim 22, further comprising:
a step (C): a step of crushing, classifying, or granulating the obtained sulfide-based inorganic solid electrolyte material.
